# EUROPEAN PATENT APPLICATION

(11) **EP 4 431 456 A1**
(43) Date of publication of application: **18.09.2024**
(21) Application number: 22892684.6
(22) Date of filing: 02.11.2022
(51) Int. Cl.: C01C 1/04, B01J 37/04, B01J 37/08, B01J 23/58, B01J 23/63, B01J 23/78, B01J 23/89, B01J 27/22

(54) **CATALYST COMPOSITION, METHOD FOR PROMOTING CATALYTIC ACTIVITY, METHOD FOR PRODUCING CATALYST COMPOSITION, AND AMMONIA SYNTHESIS METHOD USING CATALYST COMPOSITION**

(30) Priority: 09.11.2021 JP 2021182700
(71) Applicant: Japan Science and Technology Agency, Kawaguchi-shi, Saitama 332-0012 (JP)
(72) Inventor: KITANO, Masaaki, Tokyo 152-8550 (JP); HOSONO, Hideo, Tokyo 152-8550 (JP); YOKOYAMA, Toshiharu, Tokyo 152-8550 (JP); OKUNAKA, Masaaki, Tokyo 152-8550 (JP)
(74) Representative: Vossius & Partner Patentanwälte Rechtsanwälte mbB
(86) International application number: PCT/JP2022/041000
(87) International publication number: WO 2023/085185

(57) **Abstract**

The invention provides a catalyst composition capable of improving catalyst performance by adding a catalyst additive. The catalyst composition comprises a catalyst additive represented by formula (1): LₘAₙ; and a chemical reaction catalyst that includes a catalyst substance represented by formula (2): MₚO_{q}C_{w}NₛHₜ. In formula (1), L represents at least one selected from the group consisting of transition elements and Al; A represents at least one selected from the group consisting of Si, O, N, and C; m represents a numerical value of 1 or more; and n represents a numerical value of 0 or more. In formula (2), M represents one or more selected from the group consisting of typical elements and transition elements, wherein M does not include Al and Ca at the same time; p represents a numerical value of 0 or more; q represents a numerical value of 0 or more; w represents a numerical value of 0 or more; s represents a numerical value of 0 or more; and t represents a numerical value of 0 or more; q, w, s, and t are not 0 at the same time.)

## Description

### [TECHNICAL FIELD]

The present invention relates to a catalyst composition, a method for promoting catalytic activity, a method for producing a catalyst composition, and an ammonia synthesis method using the catalyst composition.

This application claims priority based on Japanese Patent Application No. 2021-182700 filed in Japan on November 9, 2021, the contents of which are incorporated herein.

### [BACKGROUND TECHNOLOGY]

Catalysts are often used to accelerate chemical reactions. An example of the chemical reaction includes a hydrogenation reaction such as an ammonia synthesis reaction. For example, a typical ammonia synthesis method is the Haber-Bosch process. The Haber-Bosch process is a method for producing ammonia by directly reacting a mixed gas of nitrogen and hydrogen under high-temperature and high-pressure conditions on a double-promoted iron catalyst containing several mass% of Al₂O₃ and K₂O in Fe₃O₄. This technology is still used industrially today by using a process that is almost the same as when it was first developed.

Meanwhile, a method of synthesizing ammonia at a temperature lower than the Haber-Bosch reaction temperature is being considered. Catalysts capable of synthesizing ammonia by coming into contact with nitrogen and hydrogen have been investigated, and transition metals have been investigated as catalytically active components. Among these methods, an efficient method has been proposed in which ruthenium (Ru) is supported as a catalytically active component on various catalyst supports and the obtained catalyst is used as an ammonia synthesis catalyst (for example, Patent Document 1).

There is a compound called a "mayenite-type compound", which is a calcium aluminosilicate whose constituent components are CaO, Al₂O₃, and SiO₂ and has the same crystal structure as mayenite. The mayenite-type compound has a typical composition represented by 12CaO·7Al₂O₃ and has a structure in which two oxygen atoms are included as "free oxygen" in a cage space formed by a crystal skeleton.

The present inventors have discovered that a catalyst, in which a transition metal is supported as a catalytically active component on a mayenite-type compound (hereinafter referred to as C12A7 electride) in which free oxygen in the mayenite-type compound is replaced with electrons, has high activity as an ammonia synthesis catalyst (Patent Document 2).

Furthermore, the present inventors have found that metal-supported catalysts using metal amide compounds, metal hydrides, typical element oxides, metal hydrides, alkaline earth metal oxides, etc. have high activity as ammonia synthesis catalysts (Patent Documents 3 to 6). Furthermore, as an ammonia synthesis catalyst, a metal-supported catalyst using a complex oxide has been disclosed (Patent Document 7).

### [Patent documents]

[Patent Document 1] Japanese Patent Application Publication No. 2006-231229
[Patent Document 2] WO 2012/077658
[Patent Document 3] WO 2016/088896
[Patent Document 4] WO 2017/082265
[Patent Document 5] Japanese Patent Application Publication No. 2019-126776
[Patent Document 6] WO 2021/172107
[Patent Document 7] WO 2019/59190

### [SUMMARY OF THE INVENTION]

### [Problem to Be Solved by the Invention]

Ammonia synthesis by the Haber-Bosch process, which mainly uses a double-promoted iron catalyst, has been put into practical use, but since it requires high-temperature and high-pressure conditions, it has a problem in terms of equipment and cost.

The metal-supported catalyst as described in Patent Document 1 usually uses a carbonaceous catalyst support such as activated carbon or an inorganic oxide catalyst support. However, these metal-supported catalysts cannot always have sufficient performance for practical use. Furthermore, the metal-supported catalysts described in Patent Documents 2 to 6 have not always had sufficiently satisfactory catalytic activity depending on the case and reaction conditions.

In other words, there is a need for an ammonia synthesis catalyst that has more excellent catalytic activity, such as sufficient reaction activity even under conditions of lower temperature and lower pressure than those of the Haber-Bosch process.

### [Means to Solve the Problem]

The present inventors have discovered a catalyst composition of the present invention that can improve catalyst performance by adding a catalyst additive, and have arrived at the present invention.

That is, the gist of the present invention is as below.
[1] A catalyst composition comprising:
   a catalyst additive represented by the following formula (1); and
   a chemical reaction catalyst comprising a catalyst substance represented by the following formula (2),

      LₘAₙ (1),

      wherein in formula (1), L represents at least one selected from the group consisting of transition elements and aluminum (Al),
      A represents at least one selected from the group consisting of silicon (Si), oxygen (O), nitrogen (N), and carbon (C),
      m represents a numerical value of 1 or more, and
      n represents a numerical value of 0 or more,

      MₚO_{q}C_{w}NₛHₜ (2),

      wherein in formula (2), M represents one or more selected from the group consisting of typical elements and transition elements, provided that M does not contain aluminum (Al) and calcium (Ca) at the same time, and
      p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.
[2] The catalyst composition according to [1],
   wherein the chemical reaction catalyst and the catalyst composition have hydrogenation reaction activity, and
   the hydrogenation reaction activity of the catalyst composition exceeds the hydrogenation reaction activity of the chemical reaction catalyst.
[3] The catalyst composition according to [2], wherein both of the hydrogenation reaction activity of the chemical reaction catalyst and the hydrogenation reaction activity of the catalyst composition are ammonia synthesis activity.
[4] The catalyst composition according to [2] or [3], wherein the catalyst additive has no hydrogenation reaction activity.
[5] The catalyst composition according to any one of [1] to [4], wherein in formula (1), L is at least one selected from the group consisting of titanium (Ti), iron (Fe), nickel (Ni), and aluminum (Al).
[6] The catalyst composition according to [5], wherein in formula (1), L is titanium (Ti).
[7] The catalyst composition according to any one of [1] to [5], wherein the catalyst additive is at least one selected from the group consisting of Fe, Ni, Al, Ti, TiSi, TiO, TiN, and TiC.
[8] The catalyst composition according to any one of [1] to [7],
   wherein in formula (2), M represents one or more selected from the group consisting of barium (Ba), cerium (Ce), magnesium (Mg), calcium (Ca), strontium (Sr), lanthanum (La), silicon (Si), and aluminum (Al), and
   p represents a numerical value of 1 or more, q represents a numerical value of 1 or more, w represents a numerical value of 0 or more, s represents a numerical value of 0 or more, and t represents a numerical value of 0 or more.
[9] The catalyst composition according to any one of [1] to [8],
   wherein in formula (2), M represents one or two or more selected from the group consisting of barium (Ba), cerium (Ce), magnesium (Mg), calcium (Ca), strontium (Sr), and lanthanum (La), and
   p represents a numerical value of 1 or more, q represents a numerical value of 1 or more, w represents 0, s represents 0, and t represents 0.
[10] The catalyst composition according to any one of [1] to [9],
   wherein the catalyst substance represented by formula (2) is a catalyst substance represented by the following formula (2-1),

   MₚO_{q} (2-1),

   wherein in formula (2-1), M, p, q, w, s, and t have the same meaning as M, p, q, w, s, and t in formula (2) above.
[11] The catalyst composition according to any one of [1] to [10], wherein the catalyst substance is one selected from the group consisting of Ba-MgO, Sr-MgO, BaAl₂O₄, CeO₂, and Ba-CeO₂.
[12] The catalyst composition according to any one of [1] to [11],
   wherein the chemical reaction catalyst further comprises a catalytically active metal,
   the chemical reaction catalyst is a metal-supported material in which the catalytically active metal is supported on a catalyst support, and
   the catalyst support is the catalyst substance represented by formula (2).
[13] The catalyst composition according to [12],
   wherein the catalytically active metal is at least one selected from the group consisting of ruthenium (Ru), cobalt (Co), iron (Fe), nickel (Ni), molybdenum (Mo), rhodium (Rh), rhenium (Re), chromium (Cr), and manganese (Mn).
[14] The catalyst composition according to [12] or [13], wherein the catalyst support does not contain silicon (Si), oxygen (O), and aluminum (Al) at the same time.
[15] The catalyst composition according to any one of [12] to [14], wherein the catalyst support is a basic metal oxide.
[16] The catalyst composition according to [15], wherein the catalyst support is a basic metal oxide having crystallinity.
[17] The catalyst composition according to any one of [1] to [4],
   wherein in formula (1), L is titanium (Ti),
   in formula (2), M represents one or two or more selected from the group consisting of barium (Ba), cerium (Ce), magnesium (Mg), calcium (Ca), strontium (Sr), and lanthanum (La),
   p represents a numerical value of 1 or more, and q represents a numerical value of 1 or more,
   the chemical reaction catalyst further comprises a catalytically active metal,
   the chemical reaction catalyst is a metal-supported material in which the catalytically active metal is supported on a catalyst support,
   the catalyst support is the catalyst substance represented by formula (2), and
   the catalytically active metal is at least one selected from the group consisting of ruthenium (Ru), cobalt (Co), and iron (Fe).
[18] The catalyst composition according to any one of [1] to [4],
   wherein the catalyst additive is at least one selected from the group consisting of Ti, TiSi, TiO, TiN, and TiC,
   the catalyst substance is one selected from the group consisting of Ba-MgO, Sr-MgO, BaAl₂O₄, CeO₂, and Ba-CeO₂,
   the chemical reaction catalyst further comprises a catalytically active metal,
   the chemical reaction catalyst is a metal-supported material in which the catalytically active metal is supported on a catalyst support,
   the catalyst support is the catalyst substance, and
   the catalytically active metal is one selected from the group consisting of Ru, Co, and Fe.
[19] A method for promoting catalytic activity, which promotes an electron donating ability of a chemical reaction catalyst to promote catalytic activity and comprises a step of adding or mixing a catalyst additive to the chemical reaction catalyst or its precursor,
   the method comprising:
   a step of reacting a mixture obtained by adding or mixing the catalyst additive to the chemical reaction catalyst or its precursor under a temperature condition of less than 700°C and in the presence of a reducing gas or an inert gas,
   wherein the catalyst additive is a catalyst additive represented by the following formula (1), and
   the chemical reaction catalyst is a chemical reaction catalyst comprising a catalytic substance represented by the following formula (2),

      LₘAₙ (1),

      wherein in formula (1), L represents at least one selected from the group consisting of transition elements and aluminum (Al),
      a represents at least one selected from the group consisting of silicon (Si), oxygen (O), nitrogen (N), and carbon (C), and
      m represents a numerical value of 1 or more, and n represents a numerical value of 0 or more,

      MₚO_{q}C_{w}NₛHₜ (2),

      wherein in formula (2), M represents one or more selected from the group consisting of typical elements and transition elements, and
      p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.
[20] The method for promoting catalytic activity according to [19], wherein the temperature condition is 600°C or less.
[21] The method for promoting catalytic activity according to [19] or [20],
   wherein the chemical reaction catalyst further includes a catalytically active metal,
   the chemical reaction catalyst is a metal-supported material in which the catalytically active metal is supported on a catalyst support, and
   the catalyst support is the catalyst substance represented by formula (2).
[22] The method for promoting catalytic activity according to any one of [19] to [21], wherein the catalytic activity is hydrogenation reaction activity.
[23] The method for promoting catalytic activity according to [22], wherein the hydrogenation reaction activity is ammonia synthesis activity.
[24] The method for promoting catalytic activity according to any one of [19] to [23], wherein the catalyst additive has no hydrogenation reaction activity.
[25] A method for producing a catalyst composition according to any one of [1] to [18], the method comprising:
   a first step of mixing the catalyst additive and the chemical reaction catalyst or its precursor; and
   a second step of reacting a first mixture obtained in the first step under a temperature condition of less than 700°C and in the presence of a reducing gas or an inert gas.
[26] A method for producing a catalyst composition, comprising:
   a first step of mixing a catalyst additive and a chemical reaction catalyst or its precursor; and
   a second step of reacting a first mixture obtained in the first step under a temperature condition of less than 700°C and in the presence of a reducing gas or an inert gas,
   wherein the catalyst additive is a catalyst additive represented by the following formula (1), and
   the chemical reaction catalyst is a chemical reaction catalyst comprising a catalyst substance represented by the following formula (2),

      LₘAₙ (1),

      wherein in formula (1), L represents at least one selected from the group consisting of transition elements and aluminum (Al),
      A represents at least one selected from the group consisting of silicon (Si), oxygen (O), nitrogen (N), and carbon (C), and
      m represents a numerical value of 1 or more, and n represents a numerical value of 0 or more,

      MₚO_{q}C_{w}NₛHₜ (2),

      wherein in formula (2), M represents one or more selected from the group consisting of typical elements and transition elements, and
      p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.
[27] The method for producing a catalyst composition according to [25] or [26], wherein the temperature condition is 600°C or less.
[28] The method for producing a catalyst composition according to any one of [25] to [27], the method further comprising:
   a third step of obtaining the catalyst composition using a second mixture obtained in the second step without removing the catalyst additive contained in the second mixture.
[29] The method for producing a catalyst composition according to any one of [25] to [28], the method further comprising:
   a third step of removing the catalyst additive contained in a second mixture using the second mixture obtained in the second step.
[30] A catalyst composition, which is obtained using the method for producing a catalyst composition according to any one of [26] to [29].
[31] A method for producing a hydride, comprising a step of reacting a raw material compound to be hydrogenated with hydrogen in the presence of the catalyst composition according to any one of [1] to [18] and [30].
[32] A method for producing ammonia, comprising a step of reacting nitrogen and hydrogen in the presence of the catalyst composition according to any one of [1] to [18] and [30].
[33] A use of a catalyst additive represented by the following formula (1) for a reaction, wherein the reaction is a reaction of reacting a mixture, obtained by adding or mixing a chemical reaction catalyst or its precursor, in the presence of a reducing gas or an inert gas under a temperature condition of less than 700°C, in a catalytic activity promotion reaction that promotes an electron donating ability of the chemical reaction catalyst to promote catalytic activity,

   LₘAₙ (1),

   wherein in formula (1), L represents at least one selected from the group consisting of transition elements and aluminum (Al),
   A represents at least one selected from the group consisting of silicon (Si), oxygen (O), nitrogen (N), and carbon (C),
   m represents a numerical value of 1 or more, and
   n represents a numerical value of 0 or more.

### [Effect of the Invention]

The catalyst performance of the catalyst composition of the present invention can be improved by adding a catalyst additive. Further, the catalyst composition of one embodiment of the present invention exhibits high ammonia synthesis activity when used as a hydrogenation reaction catalyst, particularly when used as an ammonia synthesis catalyst.

### [BRIEF EXPLANATION OF DRAWINGS]

FIG. 1 is a diagram showing dependence of catalytic activity (ammonia synthesis rate) of catalyst compositions (ammonia synthesis catalysts) of Examples 1 to 5 and Comparative Example 1 on the amount of TiSi added (reaction conditions above (▲): 400°C, 0.9MPa; reaction conditions below (Δ): 340°C, 0.9MPa).
FIG. 2 is a diagram showing the catalytic activity (ammonia synthesis rate) of the catalyst composition (ammonia synthesis catalyst) in Example 1, Example 6, and Comparative Example 1.
FIG. 3 is a diagram showing the catalytic activity (ammonia synthesis rate) of the catalyst composition (ammonia synthesis catalyst) in Example 1, Comparative Example 1, Comparative Example 2, and Comparative Example 3.
FIG. 4 is a diagram showing the catalytic activity (ammonia synthesis rate) of the catalyst composition (ammonia synthesis catalyst) in Example 1, Examples 7 to 11, Comparative Example 1, Comparative Example 2, and Comparative Examples 4 to 7.
FIG. 5 is a diagram showing the catalytic activity (ammonia synthesis rate) of the catalyst compositions (ammonia synthesis catalysts) of Example 1, Examples 12 to 19, and Comparative Example 1 (reaction conditions: 400°C, 0.9 MPa).
FIG. 6 is a diagram showing the catalytic activity (ammonia synthesis rate) of the catalyst compositions (ammonia synthesis catalysts) of Example 1, Examples 12 to 18, and Comparative Example 1 (reaction conditions: 340°C, 0.9 MPa).
FIG. 7 is a graph showing changes over time in catalytic activity (ammonia synthesis rate) in Example 1 (reaction conditions: 400°C, 0.9 MPa).

### [DESCRIPTION OF EMBODIMENTS]

### (Glossary)

In the present invention, "hydrogenation reaction activity" means having catalytic activity for a hydrogenation reaction. In addition, "catalyst having hydrogenation reaction activity" and "hydrogenation reaction catalyst" mean a catalyst having catalytic activity for a hydrogenation reaction. Hydrogenation is a reduction reaction in which hydrogen atoms are added to a compound using hydrogen gas as a reducing agent. The "hydrogenation reaction" of the present invention is particularly a hydrogenation reaction in which a catalyst is used, and is also called "catalytic hydrogenation."

In the present invention, "ammonia synthesis activity" means having catalytic activity for an ammonia synthesis reaction, which is a specific example of a hydrogenation reaction. In addition, "catalyst having ammonia synthesis activity" and "ammonia synthesis catalyst" mean a catalyst having catalytic activity for an ammonia synthesis reaction.

In the present invention, "hydrogenation reaction activity of catalyst A exceeds the hydrogenation reaction activity of catalyst B" means that catalyst A exceeds catalyst B in terms of hydrogenation reaction rate, in the case in which reaction conditions except for the type of catalyst are the same.

In the present invention, "catalytically active metal" means a metal that has catalytic activity for a certain chemical reaction. For example, when the chemical reaction is a hydrogenation reaction such as an ammonia synthesis reaction, the catalytically active metal is a metal that has hydrogenation reaction activity such as ammonia synthesis activity with respect to the hydrogenation reaction such as the ammonia synthesis reaction.

In the present invention, the term "precursor of a chemical reaction catalyst" means a raw material or an intermediate product for producing a chemical reaction catalyst. When the raw material or intermediate product contains two compounds, the precursor of the chemical reaction catalyst may be a mixture. For example, in the specific example of Example 1, the mixture of raw materials containing "MgO+Ba(NO₃)₂+Ru(NO)(NO₃)₃" is a precursor of Ru/Ba-MgO, which is a chemical reaction catalyst.

### (Catalyst Composition)

The catalyst composition of the present embodiment includes a catalyst additive represented by the following formula (1) and a chemical reaction catalyst containing a catalyst substance represented by the following formula (2).

LₘAₙ (1)

(In formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more.)

   MₚO_{q}C_{w}NₛHₜ (2)
(In formula (2), M represents one or more selected from the group consisting of typical elements and transition elements, provided that M does not contain aluminum (Al) and calcium (Ca) at the same time, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.)

The catalyst composition is not particularly limited, but examples thereof include a catalyst composition of a first embodiment, a catalyst composition of a second embodiment, and the like, as shown below.

### <First Embodiment>

The catalyst composition and the chemical reaction catalyst of the present embodiment have hydrogenation reaction activity. That is, the catalyst composition and the chemical reaction catalyst of the present embodiment are hydrogenation reaction catalysts.

The hydrogenation reaction activity of the catalyst composition preferably exceeds the hydrogenation reaction activity of the chemical reaction catalyst.

It is preferable that the hydrogenation reaction activity of the catalyst composition and the chemical reaction catalyst of the present embodiment is ammonia synthesis activity.

The catalyst additive contained in the catalyst composition of the present embodiment may or may not have hydrogenation reaction activity.

### [Catalyst Additive]

In the catalyst additive according to the present embodiment, the transition element used for L in formula (1) is not particularly limited, but is usually a transition element of Group 3, Group 4, Group 5, Group 6, Group 7, Group 8, Group 9, Group 10, or Group 11 of the periodic table, preferably a transition element of Group 4, Group 8, or Group 10, and more preferably a transition element of Group 4.

In the catalyst additive according to the present embodiment, it is preferable that in formula (1), L is at least one selected from the group consisting of titanium (Ti), iron (Fe), nickel (Ni), and aluminum (Al), and it is more preferable that L is titanium (Ti).

It is preferable that the catalyst additive is at least one selected from the group consisting of Fe, Ni, Al, Ti, TiSi, TiO, TiN, and TiC. More preferably, the catalyst additive is at least one selected from the group consisting of Ti, TiSi, TiO, TiN, and TiC. Even more preferably, the catalyst additive is Ti.

Titanium silicide is an alloy of titanium and silicon. It has an internal structure having a composite of TiSi and TiSi₂. Unless otherwise specified, titanium silicide is simply referred to as TiSi. Further, titanium silicide is sometimes referred to as TiSiₓ. In the present invention, unless otherwise specified, "TiSi" and "TiSiₓ" are used interchangeably.

The catalyst additive according to the present embodiment does not need to have hydrogenation reaction activity. Further, the catalyst additive according to the present embodiment does not need to have ammonia synthesis activity.

Examples of catalyst additives that do not have ammonia synthesis activity include Al, Ti, TiSi, TiO, TiN, and TiC.

The catalyst additive according to the present embodiment may have hydrogenation reaction activity. Furthermore, the catalyst additive according to the present embodiment may have ammonia synthesis activity.

Examples of catalyst additives having ammonia synthesis activity include Fe, Ni, and the like.

When a catalyst additive having ammonia synthesis activity is added, it is preferable that the chemical reaction catalyst described below does not contain a substance similar to this catalyst additive. For example, if the catalyst additive is Fe, it is preferable that the chemical reaction catalyst is Fe-free.

The amount of the catalyst additive added according to the present embodiment is a content of the catalyst additive with respect to 100% by mass of the final catalyst composition. It is preferably 1% by mass or more, more preferably 5% by mass or more, and even more preferably 20% by mass or more. It is preferably 60% by mass or less, more preferably 50% by mass or less, and even more preferably 45% by mass or less.

The present embodiment includes a use of the catalyst additive represented by the following formula (1) for a reaction of reacting a mixture obtained by adding or mixing a chemical reaction catalyst or its precursor under temperature conditions of lower than 700°C and in the presence of a reducing or inert gas, in a catalytic activity promoting reaction in which an electron donating ability of a chemical reaction catalyst is promoted to promote catalytic activity.

LₘAₙ (1)

(In formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more.)

In the embodiment described above, the catalyst performance of the catalyst composition of the present invention can be improved by using the catalyst additive described above for the catalytic activity promotion reaction described above. Therefore, it can be expected to suppress a decrease in the stability of the chemical reaction catalyst contained in the catalyst composition of the present invention and to reduce the burden on a reaction device due to high-temperature hydrogen treatment.

### [Chemical Reaction Catalyst]

The chemical reaction catalyst according to the first embodiment further includes a catalytically active metal. That is, the chemical reaction catalyst according to the present embodiment is a metal-supported material in which the catalytically active metal is supported on a catalyst support. The catalyst support is the catalyst substance represented by formula (2).

### «Catalytically Active Metal»

The catalytically active metal according to the present embodiment is preferably a transition metal.

The transition metal used in the present embodiment is not particularly limited, but is usually a transition metal of Group 6, Group 7, Group 8, Group 9, or Group 10 of the periodic table, preferably a transition metal of Group 6, Group 8, or Group 9, and more preferably a transition metal of Group 8 or Group 9.

It is preferable that the catalytically active metal according to the present embodiment is at least one selected from the group consisting of ruthenium (Ru), cobalt (Co), iron (Fe), nickel (Ni), molybdenum (Mo), rhodium (Rh), rhenium (Re), chromium (Cr), and manganese (Mn). It is more preferable that the catalytically active metal according to the present embodiment is at least one selected from the group consisting of ruthenium (Ru), cobalt (Co), iron (Fe), and nickel (Ni). It is even more preferable that the catalytically active metal according to the present embodiment is ruthenium (Ru).

Each of the above elements may be used alone or in combination of two or more types. Further, intermetallic compounds of these elements such as Co₃Mo₃N, Fe₃Mo₃N, Ni₂Mo₃N, Mo₂N, etc. can also be used. Preferably, each element is used alone or in combination of two or more types, and more preferably, each element is used alone, which is advantageous in terms of cost.

### «Catalyst Substance (Catalyst Support)»

In the catalyst substance (catalyst support) according to the present embodiment, in formula (2), it is preferable that M represents at least one or more selected from the group consisting of barium (Ba), cerium (Ce), magnesium (Mg), calcium (Ca), strontium (Sr), lanthanum (La), silicon (Si), and aluminum (Al); and p is a numerical value of 1 or more, q is a numerical value of 1 or more, w is a numerical value of 0 or more, s is a numerical value of 0 or more, and t is a numerical value of 0 or more.

In the catalyst substance (catalyst support) according to the present embodiment, in formula (2), it is more preferable that M represents one or more selected from the group consisting of barium (Ba), cerium (Ce), magnesium (Mg), calcium (Ca), strontium (Sr), and lanthanum (La); and p is a numerical value of 1 or more, q is a numerical value of 1 or more, w is a numerical value of 0 or more, s is a numerical value of 0 or more, and t is a numerical value of 0 or more.

The catalyst substance (catalyst support) according to the present embodiment is preferably a basic metal oxide, and more preferably a basic metal oxide having crystallinity.

Examples of the basic metal oxides include BaO, SrO, MgO, CaO, CeO₂, La₂O₃, Y₂O₃, BaAl₂O₄, and the like.

The catalyst substance (catalyst support) according to the present embodiment is more preferably a catalyst substance represented by the following formula (2-1).

MₚO_{q} (2-1)

In formula (2-1), M represents one or more selected from the group consisting of typical elements and transition elements, provided that M does not contain aluminum (Al) and calcium (Ca) at the same time. Further, it is preferable that p represents a numerical value more than 0, q represents a numerical value more than 0, w represents a numerical value more than 0, s represents a numerical value more than 0, and t represents a numerical value more than 0.

### "Compound of Formula (2-1)"

The compound of the above formula (2-1) may be an oxide of a typical element represented by the following general formula (2-1a).

AₙBₘOₗ (2-1a)

In general formula (2-1a), A is at least one selected from the group consisting of Ba and Sr, and B is at least one selected from the group consisting of Al, Ga, In, Si, Ge, and Sn, n is an integer from 1 to 17, m is an integer from 1 to 17, and 1 represents a number represented by an integer from 1 to 26. It is preferable that 1 is 4 or 5.

The "typical element" according to the present embodiment refers to an element of Groups 1, 2, and 12 to 18 of the periodic table. That is, it is not a transition element from Groups 3 to 11 of the periodic table (elements of Groups 3 to 11 of the periodic table). It is preferable that the "typical element oxide" or "typical element complex oxide" according to the present invention refers to a material containing 90% by mass or more of an oxide or a complex oxide, which contains oxygen and the other typical elements excluding oxygen (elements of Group 1, Group 2, and Groups 12 to 18 of the periodic table). It is more preferable to contain 95% by mass or more, 99% by mass or more, or substantially 100% by mass. It is even more preferable to contain substantially 100% by mass. "Contain substantially 100% by mass" means, for example, that the content of transition elements is less than 1% by mass, or less than 0.5% by mass.

The catalyst support of the metal-supported material of the present invention preferably contains 50% by mass or more of the "typical element oxide" or "typical element complex oxide" according to the present invention. It is more preferable to contain 70% by mass or more. It is even more preferable to contain 90% by mass or more. It is particularly preferable to contain substantially 100% by mass or more. "Contain substantially 100% by mass" means, for example, that the content of the transition element oxide is less than 1% by mass, or less than 0.5% by mass in terms of transition elements.

Specific examples of typical element oxides of the present embodiment include BaAl₂O₄, Ba₃Al₂O₆, Ba₄Al₂O₇, Ba₁₇Al₃O₇, BaAl₄O₇, BaAl₁₂O₁₉, BaGa₂O₄, BaGa₄O₇, Ba₄Ga₂O₇, Ba₃Ga₂O₆, BaInO_{2.5}, Ba₃In₂O₆, Ba₈In₆O₁₇, Ba₂In₂O₅, Ba₄In₂O₇, Ba₄In₆O₁₃, SrAl₂O₄, SrAl₁₂O₁₉, SrAl₄O₇, Sr₄Al₁₄O₂₅, Sr₉Al₆O₁₈, Sr₃Al₂O₆, Sr₁₀Al₆O₁₉, Sr₂Al₆O₁₁, Sr₇Al₁₂O₂₅, SrGa₂O₄, Sr₃Ga₄O₉, SrGa₁₂O₁₉, Sr₁₀Ga₆O₁₉, Sr₃Ga₂O₆, Sr₄Ga₂O₇, Sr₂Ga₂O₅, Sr₅Ga₆O₁₄, SrGa₄O₇, Ba₃SiO₅, Ba₂SiO₄, Ba₂Si₄O₁₀, Ba₄Si₆O₁₆, BaSi₄O₉, Ba₅Si₈O₂₁, Ba₆Si₁₀O₂₆, BaSiO₃, BaSi₂O₅, Ba₃GeO, BaGe₄O₉, BaGe₂O₅, Ba₁₀Ge₇O₃, BaGeO₃, Ba₃Ge₃O₉, Sr₃SiO₅, Sr₃Si₃O₉, Sr₄Si₄O₁₂, Sr₂SiO₄, SrSiO₃, SrSi₂O₅, SnSiO, Sr₃GeO, Sr₂GeO₄, SrGeO₃, SrGe₄O₉, SrGe₂O₅, and the like. Among them, BaAl₂O₄, Ba₂SiO₄, and Ba₃SiO₅ are preferred from the viewpoint of availability, ease of preparation, versatility, etc., and BaAl₂O₄ is more preferred.

### [Method for Producing Typical Element Oxide]

An example of synthesis of BaAl₂O₄ and an example of synthesis of Ba₂SiO₄ are used to explain the invention.

### <Synthesis of BaAl₂O₄>

BaAl₂O₄ is obtained by mixing 0.148 g of barium carbonate (Wako Pure Chemical Corporation, 99.9%) and 0.117 g of aluminum hydroxide (Kojundo Chemical Laboratory Co.,Ltd., 99.99%) at a molar ratio of 1:2 to obtain a mixture, placing the mixture in an alumina crucible, heating the mixture at 1000°C for 3 hours, and maintaining the mixture for 10 hours.

### <Synthesis of Ba₂SiO₄>

A reaction of Ba(CH₃COO)₂ (Kanto Chemical Co., Inc., 9.0%) and TEOS (tetraethylene orthosilicate) was carried out in ethylene glycol (Kanto Chemical Co., Inc., Wako Pure Chemical Corporation, 99.0%), used as a solvent, in which citric acid (Kojundo Chemical Laboratory Co.,Ltd., 99.0%) was dissolved in advance, by a complex polymerization method. A stoichiometric amount of the obtained reactant (Ba₂SiO₄ raw material) was prepared and put in a beaker with a stirring bar, in which ethylene glycol used as a solvent was added, and then stirred overnight at 120°C, wherein citric acid had been dissolved in the ethylene glycol in advance. Next, the temperature was raised to 180°C and maintained for 6 hours to obtain a brown gel-like substance. Thereafter, the obtained gel-like substance was transferred to a mantle heater together with the beaker, and maintained at 450°C for 2 hours to obtain a black powder. The obtained black powder was placed in an alumina crucible. A target white powder Ba₂SiO₄ was obtained by heating the powder to 800°C for 40 minutes using an electric furnace, and holding the powder at 800°C for 4 hours.

### <Group 13 Typical Element Oxide>

The typical element oxide according to the present embodiment may be a complex oxide of typical elements represented by the following general formula (2-1b).

AB₂O₁ (2-1b)

(In general formula (2-1b), B is at least one selected from the group consisting of Al, Ga, and In, l is a numerical value represented by 3.5 ≤ l ≤ 4.5, and A has the same meaning as A in general formula (1).)

The compound represented by the above general formula (2-1b) is a compound represented by the above general formula (2-1a), wherein n is 1, m is 2, and l represents a numerical value expressed by 3.5 ≤ l ≤ 4.5, and B is at least one selected from the group consisting of Al, Ga, and In.

In general formula (2), 1 preferably represents a numerical value expressed by 3.8 ≤ l ≤ 4.2, more preferably a numerical value expressed by 3.9 ≤ l ≤ 4.1, and it is even more preferable that 1 is 4.

A commercial product of BaAl₂O₄ or a product prepared by the method described in the present application can be used.

### <Typical Element Oxide Containing Group 14 Typical Element>

The typical element oxide of the present embodiment is represented by the following general formula (2-1c).

A₂BO₁ (2-1c)

(In general formula (2-1c), B is at least one selected from the group consisting of Si, Ge, and Sn, l represents a numerical value expressed by 3.5 ≤ 1 ≤ 4.5, and A has the same meaning as A in general formula (2-1a).)

The compound represented by the above general formula (2-1c) is a compound represented by the above general formula (2-1a), wherein n is 2, m is 1, and l represents a numerical value expressed by 3.5 ≤ 1 ≤ 4.5, and B is at least one selected from the group consisting of Si, Ge, and Sn.

In general formula (2-1c), 1 preferably represents a number value expressed by 3.8 ≤ l ≤ 4.2, and more preferably represents a number value expressed by 3.9 ≤ l ≤ 4.1, and it is even more preferable that l is 4.

The compound of the above formula (2-1) may be a complex oxide represented by the following general formula (2-1d).

AₙX_{y}MₘOₓ (2-1d)

(In general formula (2-1d), A is a rare earth element characterized in that at least a part or all of A is in a III-valent state,
X is either a Group 2 element, a Group 4 element, or a rare earth element of the periodic table, and represents an element different from A,
M is either a Group 2 element, a Group 4 element, or a rare earth element of the periodic table, and represents an element different from the above A and the above X,
n is 0 < n < 1,
y is 1 - n,
m is 0 ≤ m ≤ 0.5, and
x represents the number of oxygen atoms necessary for the complex oxide to remain electrically neutral.

Examples of such element A include lanthanoids, and preferably include Ce, Pr, Tb, and La. Ce and La are more preferred, and Ce is even more preferred.

The element X constituting the complex oxide of general formula (2-1d) is selected from a Group 2 element of the periodic table such as Mg, Ca, Sr, or Ba; a Group 4 element such as Ti, Zr, or Hf; or a rare earth element such as Sc, Y, La, Ce, Pr, Nd, Sm, Eu, Gd, Tb, Dy, Ho, Er, Tm, Yb, or Lu. The element X is not the same as A, which is another element that makes up the complex oxide, and X and M are not the same as each other. When element M is a Group 2 element of the periodic table, it is preferably selected from Ca, Sr, and Ba. Furthermore, when element M is a rare earth element, it is preferably a lanthanide.

The element M constituting the complex oxide of general formula (2-1d) is selected from a Group 1 element of the periodic table such as Na, K, Rb, Cs, Fr, etc.; a Group 2 element of the periodic table such as Mg, Ca, Sr, Ba, etc.; a Group 4 element such as Ti, Zr, or Hf; or a rare earth element such as Sc, Y, La, Ce, Pr, Nd, Sm, Eu, Gd, Tb, Dy, Ho, Er, Tm, Yb, or Lu. The element M is not the same as the other element A constituting the complex oxide, and X and M are not the same as each other. When element X is a Group 2 element of the periodic table, it is preferably selected from Ca, Sr, and Ba. Furthermore, when element X is a rare earth element, it is preferably a lanthanide. In particular, from the viewpoint of ammonia synthesis activity, the element M is preferably Ba.

Preferably, X and M are selected from Zr and La. The complex oxide in the present invention may contain, as X and M, two types among Group 4 elements of the periodic table or rare earth elements, or may contain, as X, only one type among Group 4 elements of the periodic table or rare earth elements (in general formula (2-1d), m = 0).

When the complex oxide of the present invention is represented by general formula (2-1d), the ranges of n, y, m, and x are as follows.

In general formula (2-1d), n representing the proportion of element A in the complex oxide is 0 < n < 1, preferably 0.05 < n < 0.95, more preferably 0.1 < n < 0.9, and even more preferably 0.35 ≤ n ≤ 0.5.

In general formula (2-1d), y representing the proportion of element X in the complex oxide is 0 < y < 1, preferably 0.05 < y < 0.95, more preferably 0.1 < y < 0.9, and even more preferably 0.35 ≤ y ≤ 0.5.

In general formula (2-1d), m representing the proportion of element M in the complex oxide is 0 ≤ m < 1, m in general formula (2) is 0 ≤ m ≤ 0.5, and for both formulas (1) and (2), preferably 0 < m < 0.5, more preferably 0.05 ≤ m ≤ 0.45, and even more preferably 0.1 ≤ m ≤ 0.3. When m = 0, the complex oxide contains only A, X, and O.

In the case of a binary catalyst support containing two metal elements, such as La_{0.5}Ce_{0.5}O_{1.75}, when these elements are a complex of lanthanide-based elements, in many cases, the catalyst support becomes a solid solution in which the elements are solid-dissolved uniformly. The Ru particles then come into direct contact with the surface. It is presumed that when Ce is reduced, since both La and Ce are strong basic elements in an oxide state, there are many active sites with Ru, and as a result, the ammonia synthesis activity increases.

In the case of a ternary catalyst support containing three metal elements, such as Ba_{0.1}La_{0.45}Ce_{0.45}Oₓ, Ba has a larger atomic radius than that of La and Ce. In this case, when the firing temperature of the raw material mixture is high, for example, when the firing temperature is more than 1000°C, all the elements are uniformly dissolved in a solid solution to become a perovskite-type crystal structure. On the other hand, when the firing temperature of the raw material mixture is low, since Ba is a large element, it is difficult to form a solid solution with other elements. Therefore, a structure is formed in which Ba is mixed non-uniformly in a solid solution of La and Ce, and a partial amount of Ba is exposed on the surface of the solid solution of La and Ce. It is assumed that since Ba is a strong basic element with a higher value of partial negative charge of oxygen than La and Ce, in a catalyst support where Ba is unevenly exposed, a contact area between Ba and Ru increases, and as a result, the activity points increase, and therefore, the ammonia synthesis activity increases.

Specific examples of the complex oxides of the present embodiment include the following.

Ce_{0.5}La_{0.5}Oₓ

Pr_{0.5}La_{0.5}Oₓ

Ba_{0.3}Pr_{0.35}Ce_{0.35}Oₓ

Ba_{0.1}La_{0.45}Ce_{0.45}Oₓ

### <Method for Producing Metal Oxides/Metal-Supported Materials>

The complex oxide of the present embodiment can be produced by a method including the following steps.
(a) A mixing step of obtaining a mixture by mixing an A precursor containing element A, an X precursor containing element X, and an M precursor containing element M.
(b) A firing step of firing this mixture.

The above specific example of the complex oxides of the present embodiment can be synthesized by the same method as disclosed in the example of Patent Document 7.

Examples of the catalyst substance (catalyst support) according to the present embodiment include Ba-MgO, Sr-MgO, BaAl₂O₄, CeO₂, and Ba-CeO₂. Among them, Ba-MgO, BaAl₂O₄, CeO₂, and Ba-CeO₂ are preferred.

It is preferable that the catalyst substance (catalyst support) according to the present embodiment does not contain silicon (Si), oxygen (O), and aluminum (Al) at the same time.

### «Metal-Supported Material»

The metal-supported material of the present embodiment is material in which a transition metal (M) is supported on the above catalyst substance (catalyst support). It is preferable that the transition metal (M) is at least one selected from the group consisting of Ru, Co, and Fe.

A loading amount of the transition metal is not particularly limited, but, with respect to 100 parts by mass of the support, it is usually 0.01 parts by mass (0.01% by mass) or more, preferably 0.5 parts by mass (0.5% by mass) or more, more preferably 1 part by mass (1% by mass) or more, and even more preferably 2 parts by mass (2% by mass) or more, and usually 50 parts by mass (50% by mass) or less, preferably 30 parts by mass (30 mass%) or less, more preferably 20 parts by mass (20% by mass) or less, and even more preferably 10 parts by mass (10% by mass) or less. If it is above the lower limit, the effect of the present invention can be obtained, and if it is below the above upper limit, the effect of the present invention, which is worthwhile in terms of the supported amount and cost, can be obtained.

### <Method for Loading Transition Metal (M) on Metal-Supported Material>

Although the method for loading a transition metal (M) on the metal-supported material is not particularly limited, for example, a metal-supported material can be obtained by fixing the transition metal (M) on a catalyst substance (catalyst support) by the following methods. The above methods include, for example, a step of dispersing both the catalyst substance (catalyst support) and the metal precursor to be supported in an aqueous solution and stirring; a step of drying the resulting mixture at 140°C for about 2 hours; and then a step of heating the obtained dried product at 400°C for 4 hours in a nitrogen atmosphere to thermally decompose the metal compound.

Examples of the transition metal compounds, in which the transition metal (M) is Ru, Co, or Fe, include nitrates, formates, carbonyl complexes, and the like. Specifically, for example, Ru(NO)(NO₃)₃, Co(NO₃)₂, and Fe(NO₃)₃ are used to prepare a metal-supported material, such as a Ru-supported material (abbreviated as Ru/catalyst support), a Co-supported material (abbreviated as Co/catalyst support), and an Fe-supported material (abbreviated as Fe/catalyst support), respectively.

### <Forms of Metal-Supported Material>

The shape of the metal-supported material of the present embodiment is not particularly limited, and specifically, it may be in any form such as lump-like, powder-like, or film-like, but it is usually powder-like. Although the particle size of the powdered metal-supported material is not particularly limited, it is usually 1 nm or more and 10 µm or less.

Although the particle size of the transition metal in the metal-supported material of the present embodiment is not particularly limited, it is usually 1 nm or more and 100 nm or less. From the viewpoint that it is advantageous in increasing the number of step sites, which are active sites for nitrogen dissociation, when the metal-supported material is used as an ammonia synthesis catalyst, the particle size of the transition metal is preferably 20 nm or less, and more preferably 10 nm or less.

An example of the catalyst composition of the present embodiment includes an ammonia synthesis catalyst, in which
the catalyst additive according to the present embodiment is at least one selected from the group consisting of Ti, TiSi, TiO, TiN, and TiC,
the catalyst substance according to the present embodiment is one selected from the group consisting of Ba-MgO, Sr-MgO, BaAl₂O₄, CeO₂, and Ba-CeO₂,
the chemical reaction catalyst according to the present embodiment further includes a catalytically active metal,
the chemical reaction catalyst is a metal-supported material in which the catalytically active metal is supported on a catalyst support,
the catalyst support is the catalyst substance, and
the catalytically active metal is one selected from the group consisting of Ru, Co, and Fe.

An example of the catalyst composition of the present embodiment includes an ammonia synthesis catalyst, in which
the catalyst additive according to the present embodiment is at least one selected from the group consisting of Ti, TiSi, TiO, TiN, and TiC,
the catalyst substance according to the present embodiment is one selected from the group consisting of Ba-MgO, BaAl₂O₄, CeO₂, and Ba-CeO₂,
the chemical reaction catalyst according to the present embodiment further includes a catalytically active metal,
the chemical reaction catalyst is a metal-supported material in which the catalytically active metal is supported on a catalyst support,
the catalyst support is the catalyst substance, and
the catalytically active metal is one selected from the group consisting of Ru, Co, and Fe.

### <Second Embodiment>

The catalyst composition of the present embodiment can use the same catalyst additive and catalyst substance as described in the first embodiment. Each embodiment, preferred example, production method, etc. regarding the catalyst additive and the catalyst substance in the first embodiment are incorporated into the present embodiment.

In comparison with the catalyst composition of the first embodiment, the catalyst composition of the present embodiment uses a chemical reaction catalyst different from the chemical reaction catalyst of the first embodiment. The chemical reaction catalyst of the present embodiment differs from the chemical reaction catalyst of the first embodiment in that the chemical reaction catalyst of the present embodiment does not contain a catalytically active metal. Further, the present embodiment is the same as the first embodiment except that the chemical reaction catalyst of the present embodiment does not contain a catalytically active metal. That is, the chemical reaction catalyst of the present embodiment includes a catalyst substance that does not support a catalytically active metal. The catalyst substance of the present embodiment is the same as the catalyst substance of the first embodiment.

The chemical reaction catalyst according to the present embodiment may further contain a substance (excluding a catalytically active metal) that is not the catalyst substance, if necessary. The chemical reaction catalyst of the present embodiment is preferably the catalyst substance of the present embodiment.

An example of the catalyst composition of the present embodiment includes an ammonia synthesis catalyst, in which
the catalyst additive according to the present embodiment is at least one selected from the group consisting of Ti, TiSi, TiO, TiN, and TiC,
the catalyst substance according to the present embodiment is one selected from the group consisting of Ba-MgO, Sr-MgO, BaAl₂O₄, CeO₂, and Ba-CeO, and
the chemical reaction catalyst according to the present embodiment is the catalyst substance.

Further, an example of the catalyst composition of the present embodiment includes an ammonia synthesis catalyst, in which
the catalyst additive according to the present embodiment is at least one selected from the group consisting of Ti, TiSi, TiO, TiN, and TiC,
the catalyst substance is one selected from the group consisting of Ba-MgO, BaAl₂O₄, CeOz, Ba-CeOz, and
the chemical reaction catalyst according to the present embodiment is the catalyst composition described above.

### (Method for Promoting Catalytic Activity)

The catalytic activity promoting method of the present embodiment is a method for promoting catalytic activity by promoting the electron donating ability of the chemical reaction catalyst, and the method includes a step of adding or mixing a catalyst additive to a chemical reaction catalyst or its precursor.

The catalytic activity promoting method of the present embodiment include a step of reacting the mixture, which is obtained by adding or mixing the catalyst additive to a chemical reaction catalyst or its precursor, under a temperature condition of less than 700°C and in the presence of a reducing gas or an inert gas,
wherein the catalyst additive is a catalyst additive represented by the following formula (1), and
the chemical reaction catalyst is a chemical reaction catalyst containing a catalyst substance represented by the following formula (2).

   LₘAₙ (1)
(In formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more.)

   MₚO_{q}C_{w}NₛHₜ (2)
(In formula (2), M represents one or more selected from the group consisting of typical elements and transition elements, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.)

It is preferable that the temperature condition is 600°C or less.

In the method for promoting catalytic activity of the present embodiment, the chemical reaction catalyst may include a catalyst substance and a catalytically active metal.

The chemical reaction catalyst is a metal-supported material in which the catalytically active metal is supported on a catalyst support.

The catalyst support is the catalyst substance represented by formula (2).

In the method for promoting catalytic activity of the present embodiment, the chemical reaction catalyst does not need to contain a catalytically active metal.

In the method for promoting catalytic activity of the present embodiment, the catalytic activity is preferably hydrogenation reaction activity, and more preferably ammonia synthesis activity.

In the method for promoting catalytic activity of the present embodiment, the catalyst additive may or may not have hydrogenation reaction activity.

As preferred embodiments and specific examples of the catalyst additive and the chemical reaction catalyst according to the present embodiment, the preferred embodiments and specific examples described in the above-mentioned first embodiment and second embodiment of the catalyst composition may be used.

### (Method for Producing Catalyst Composition)

One embodiment of the production method of the present invention is a method of producing the aforementioned catalyst composition. The production method of the present embodiment includes a first step of mixing the catalyst additive and the chemical reaction catalyst or its precursor, and
a second step of reacting a first mixture obtained in the first step under a temperature condition of less than 700°C and in the presence of a reducing gas or an inert gas.

Other embodiments of the production method of the present invention include a first step of mixing a catalyst additive and a chemical reaction catalyst or a precursor thereof, and
a second step of reacting a first mixture obtained in the first step under a temperature condition of less than 700°C and in the presence of a reducing gas or an inert gas.

The catalyst additive is a catalyst additive represented by the following formula (1).

The chemical reaction catalyst is a chemical reaction catalyst containing a catalyst substance represented by the following formula (2).

LₘAₙ (1)

(In formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more.)

   MₚO_{q}C_{w}NₛHₜ (2)
(In formula (2), M represents one or more selected from the group consisting of typical elements and transition elements, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.)

It is preferable that the above temperature condition is 600°C or less. The above temperature condition may be 500°C or less.

The production method of the present embodiment may further include a third step of obtaining the catalyst composition using a second mixture obtained in the second step without removing the catalyst additive contained in the second mixture.

The production method of the present embodiment may further include a third step of using a second mixture obtained in the second step to remove the catalyst additive contained in the second mixture. In such a production method, after the third step, the catalyst composition may contain a small amount of catalyst additive remaining, or may not contain a catalyst additive. Here, the above-mentioned "small amount" means, for example, the amount of "catalyst additive remaining" is 1% to 5% by mass, 1% to 2.5% by mass, 1% to 2.0% by mass, or 1% to 1.5% by mass.

Here, "not contain" means that the content (added amount) of the catalyst additive is 0% or more and less than 1% by mass, 0% to 0.5% by mass, or 0% to 0.25% by mass, with respect to 100% by mass of the catalyst composition.

Preferred embodiments and specific examples of the catalyst additive and the chemical reaction catalyst according to the production method of the present embodiment refer to the preferred embodiments and the specific examples described in the first embodiment and the second embodiment of the catalyst composition described above.

### (Method of Producing Compound Using Catalyst Composition as Catalyst)

### <Method for Producing Hydride>

The method for producing a hydride of the present embodiment includes a step of reacting a raw material compound to be hydrogenated with hydrogen in the presence of the catalyst composition of the present embodiment described above.

### <Method for Producing Ammonia>

The method for producing ammonia according to the present embodiment includes a step of reacting nitrogen and hydrogen in the presence of the catalyst composition according to the present embodiment.

In the present embodiment, the catalyst composition is an ammonia catalyst.

The method for producing ammonia of the present embodiment (hereinafter sometimes referred to as the production method of the present embodiment) uses the ammonia synthesis catalyst of the present embodiment as a catalyst, and is a method for producing ammonia by reacting hydrogen and nitrogen on the catalyst.

The specific production method is not particularly limited as long as it is a method of synthesizing ammonia by bringing hydrogen and nitrogen into contact on the catalyst, and the ammonia can be produced according to any known production method.

In the method for producing ammonia of the present embodiment, ammonia is usually produced by heating the catalyst when bringing hydrogen and nitrogen into contact with each other on the catalyst.

The reaction temperature in the production method of the present embodiment is not particularly limited, but is usually 200°C or higher, preferably 250°C or higher, and more preferably 300°C or higher, and usually 600°C or lower, preferably 500°C or lower, and more preferably 450°C or lower. Since ammonia synthesis is an exothermic reaction, a low temperature condition is more advantageous for ammonia production in terms of chemical equilibrium theory, but in order to obtain a sufficient ammonia production rate, it is preferable to carry out the reaction in the above temperature range.

In the production method of the present embodiment, the molar ratio of nitrogen and hydrogen brought into contact with the catalyst is not particularly limited, but the ratio of hydrogen to nitrogen (H₂/N₂ (volume/volume)) is usually 0.4 or more, preferably 0.5 or more, and more preferably 1 or more, and usually 10 or less, and preferably 5 or less.

The reaction pressure in the production method of the present embodiment is not particularly limited, but the pressure of a mixed gas containing nitrogen and hydrogen is usually 0.01 MPa or more, and preferably 0.1 MPa or more, and usually 20 MPa or less, preferably 15 MPa or less, and more preferably 10 MPa or less. Furthermore, for practical use, it is preferable to carry out the reaction under pressurized conditions with atmospheric pressure or higher.

In the production method of the present embodiment, it is preferable to remove moisture and oxides adhering to the catalyst by using a dehydrating material, cryogenic separation, hydrogen gas, etc., before bringing nitrogen and hydrogen into contact with the catalyst. An example of the removing method includes reduction treatment.

In the production method of the present embodiment, in order to obtain a better ammonia yield, it is preferable that the water content in the nitrogen and hydrogen used in the production method of the present embodiment is small. Although it is not particularly limited, the total moisture content in the mixed gas of nitrogen and hydrogen is usually 100 ppm or less, and preferably 50 ppm or less.

In the production method of the present embodiment, the type of reaction vessel is not particularly limited, and any reaction vessel that can be commonly used for an ammonia synthesis reaction can be used. As a specific reaction form, for example, a batch reaction form, a closed circulation system reaction form, a flow system reaction form, etc. can be used. Among these, the flow system reaction form is preferred from a practical standpoint. Further, it is possible to use a method of connecting one type of reactor filled with a catalyst or connecting a plurality of reactors, or a method of using a single reactor having a plurality of reaction layers.

Since the reaction of synthesizing ammonia from hydrogen and nitrogen is an exothermic reaction accompanied by volumetric contraction, industrially it is preferable to remove the reaction heat in order to increase the ammonia yield. Any known reactor having a device for removing heat usually used may be used. Specifically, for example, a method may be used in which heat is removed by connecting a plurality of reactors filled with a catalyst in series and an intercooler is installed at an outlet of each reactor.

In the ammonia production method of the present embodiment, the ammonia synthesis catalyst obtained by the production method of the present embodiment may be used alone or in combination with other known catalysts that can be normally used for ammonia synthesis.

Preferred embodiments and specific examples of the catalyst composition according to the production method of the present embodiment can refer to the preferred embodiments and the specific examples described in the above-mentioned first embodiment and second embodiment of the catalyst composition.

### <Other Applications>

The catalyst composition of the present invention may be used as a catalyst in various reactions. Specifically, it can be used, for example, for hydrogenation of unsaturated bonds in olefins, acetylenes, aromatic rings, aldehyde groups, α and β unsaturated aldehydes; hydrogenolysis of hydrocarbons; hydrogen transfer reactions; and the like. The transition metal which is supported on the catalyst is not particularly limited, but examples thereof include Ni, Pd, Pt, Rh, Ru, and the like.

In the method of the present invention, either ammonia diluted with a balance gas or ammonia alone, for example, ammonia gas with a volume fraction of 0.1 to 100%, can be used as the raw material. When hydrogen is produced by an ammonia decomposition reaction, it is necessary to separate the produced hydrogen and nitrogen, so the ammonia volume fraction is preferably high, and the volume fraction is preferably 5% or more, more preferably 20% or more, and even more preferably 70% or more. The decomposition reaction is carried out at a weight hourly space velocity (WHSV) of 500 mlg⁻¹h⁻¹ or more, and a high NH₃ conversion rate can be obtained.

The gas produced by the ammonia decomposition method of the present invention is theoretically obtained in a molar ratio of hydrogen and nitrogen of 3:1. For example, the gas can be used as bright annealing gas for stainless steel, nickel steel, nickel, nickel-copper, or nickel-chromium alloy. Furthermore, since the hydrogen obtained by the present invention does not contain CO or CO₂ that are harmful to fuel cells, the hydrogen can be used as hydrogen for fuel cells, for example, by separating and refining the generated hydrogen and nitrogen.

In other applications such as the ammonia decomposition reaction, preferred embodiments and specific examples of the catalyst composition to be used refer to the preferred embodiments and the specific examples described in the above-mentioned first embodiment and second embodiment of the catalyst composition.

### (Another Embodiment Regarding Use of Catalyst Additive)

Examples of another embodiment of the use of the catalyst additive includes a use of a catalyst additive represented by the following formula (1) for the reaction of reacting a mixture, which is obtained by adding to or mixing with a chemical reaction catalyst or its precursor, under temperature conditions of less than 700°C and in the presence of a reducing gas or an inert gas, in a catalytic activity promotion reaction that promotes the electron donating ability of the chemical reaction catalyst to promote catalytic activity.

LₘAₙ (1)

(In formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more.)

The chemical reaction catalyst and the catalyst additive in the use of the catalyst additive of the present embodiment are the preferred embodiments and the preferred examples of each chemical reaction catalyst and catalyst additive described in the catalyst composition described above. Those descriptions may be hereby incorporated.

### [EXAMPLES]

The present invention will be explained in more detail below based on examples.

The ammonia synthesis activity was evaluated by determining the rate of ammonia production by measuring the amount of NH₃ produced by gas chromatography, or by measuring the amount of NH₃ by dissolving the produced NH₃ in an aqueous sulfuric acid solution and quantifying the solution by ion chromatography.

### (Ion Chromatogram Analysis)

Ammonia gas discharged from the reaction vessel was dissolved in a 5 mM aqueous sulfuric acid solution, and the captured ammonium ions (NH₄⁺) were analyzed by ion chromatography. The analysis conditions are shown as follows.

### [Measurement Conditions]

Equipment: Prominence manufactured by Shimadzu Corporation
Detector: Electrical conductivity detector CDD-lOAvp (manufactured by Shimadzu Corporation)
Column: Ion chromatogram column IC-C4 (manufactured by Shimadzu Corporation)
Eluent: 3.0 mM oxalic acid + 2.0 mM 18-crown-6-ether aqueous solution
Flow rate: 1.0 mL/min
Column temperature: 40°C

### (Example 1)

### (Preparation of Catalyst Composition (Ammonia Synthesis Catalyst))

### [Synthesis of TiSi-Added Ru/Ba-MgO Powder]

### (I) Preparation of a mixture of TiSi and precursor of chemical reaction catalyst Ru/Ba-MgO

As MgO, a product manufactured by Ube Materials (average particle size: 50 nm, purity: 99.98%, model number: 500A) was used.

An aqueous solution containing 0.0638g of Ba(NO₃)₂, 0.1714 g of Ru(NO)(NO₃)₃ (equivalent to 5% by mass of supported metal Ru with respect to Ba-MgO), and 1.3 g of distilled water was prepared. A brown paste was obtained by adding 1.0 g of MgO powder to the above aqueous solution and kneading it in a mortar for about 15 minutes. 0.364 g of TiSi (addition amount: 25% by mass with respect to Ru/Ba-MgO) was added to the obtained paste, and the paste was kneaded in a mortar. A mixture of TiSi+"MgO+Ba(NO₃)₂+Ru(NO)(NO₃)₃" was obtained by drying the obtained kneaded product at 140°C for 2 hours.

(II) The mixture obtained above was heated in a nitrogen atmosphere at atmospheric pressure from room temperature to 400°C at a heating rate of 5°C/min, and then held at 450°C for an additional 4 hours. Thereafter, by cooling the mixture to room temperature, a TiSi-added Ru/Ba-MgO powder was obtained as the catalyst composition (ammonia synthesis catalyst) of the present example.

### [Ammonia Synthesis Using TiSi-Added Ru/Ba-MgO]

### <Ammonia Synthesis Reaction>

An ammonia synthesis reaction was carried out by using the TiSi-added Ru/Ba-MgO as a catalyst and bringing this catalyst into contact with a mixed gas of nitrogen and hydrogen (N₂/H₂ = 1/3(v/v)). 0.1 g of the TiSi-added Ru/Ba-MgO was packed into an SUS reaction tube, and a reaction was carried out using a fixed bed flow reactor incorporating the reaction tube. The moisture concentrations of the raw material nitrogen gas and hydrogen gas were each below the detection limit. Regarding the flow rates of the raw material gases during this reaction, nitrogen gas was 15 mL/min, and hydrogen gas was 45 mL/min (total 60 mL/min). The reaction pressure during this reaction was 0.9 MPa, the reaction temperature was 400°C, and the reaction time was 30 hours. As a pretreatment reaction before the reaction, the catalyst was held at 450°C for 20 hours under the same conditions as the ammonia synthesis reaction described above. Thereafter, the reaction conditions were set and the catalytic activity was evaluated.

Similarly, an ammonia synthesis reaction was also conducted in which the reaction pressure during the reaction was 0.9 MPa, the reaction temperature was 340°C, and the reaction time was 30 hours.

### <Ammonia Production Rate>

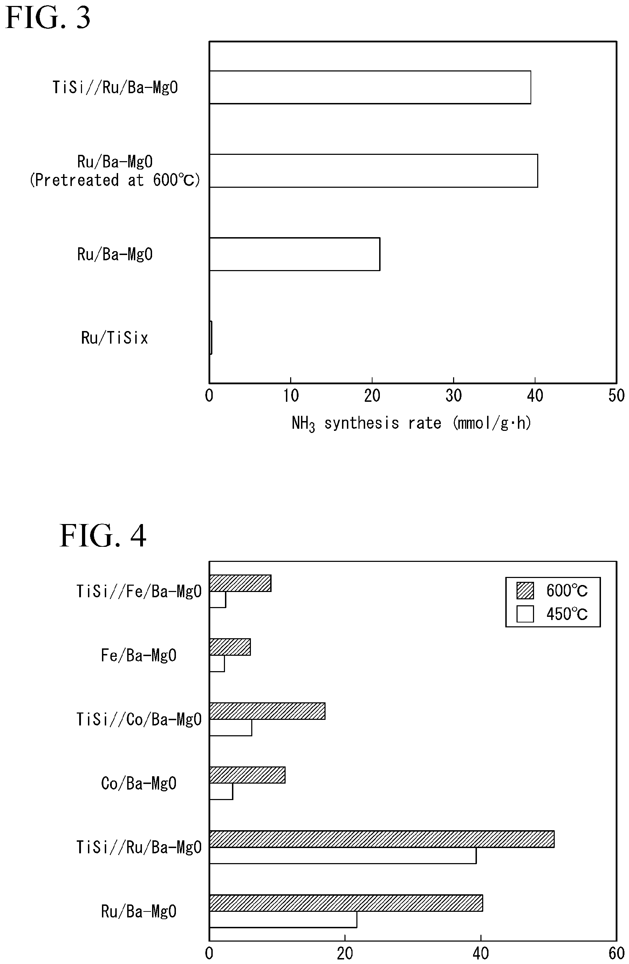

By bubbling the gas coming out of the fixed bed flow reactor into a 0.005M sulfuric acid aqueous solution, ammonia in the gas was dissolved in the aqueous solution. The ammonium ions generated in the aqueous solution were quantified by the method described above using the ion chromatograph. As a result of measuring the production rate of ammonia produced by the ammonia synthesis reaction over time using ion chromatography, the TiSi-added Ru/Ba-MgO showed higher catalytic activity than the catalyst Ru/Ba-MgO without the TiSi addition (as shown in FIG. 4, Table 1).

The ammonia production rate of the TiSi-added Ru/Ba-MgO catalyst at 400°C was 39.4 mmol/g hr.

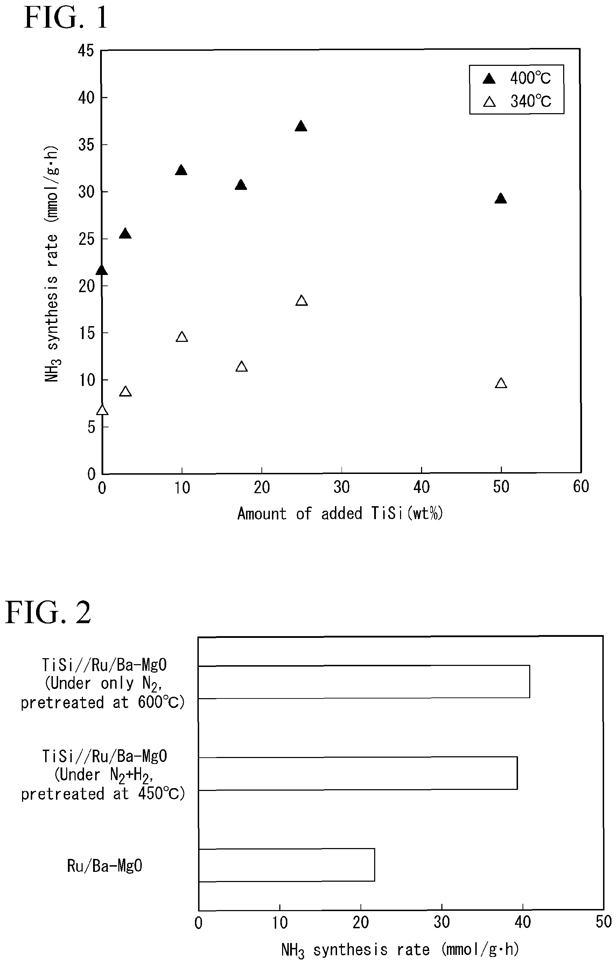

The results are shown in FIG. 1.

### <Change of Ammonia Synthesis Reaction over Time>

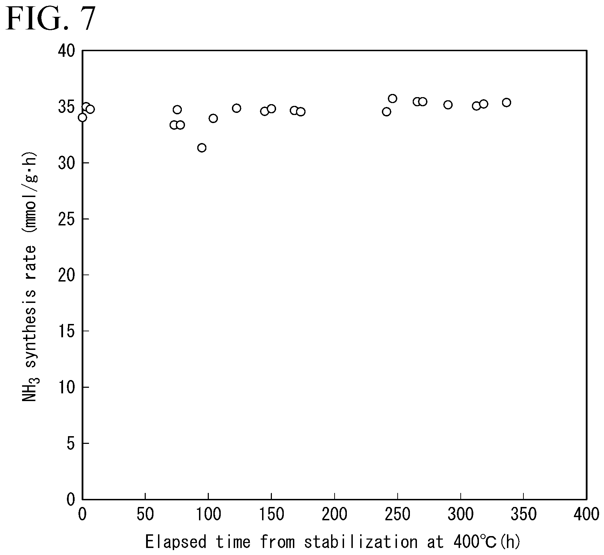

The ammonia synthesis rate at 400°C and 0.9 MPa was measured in the same manner as above, except that the reaction time was changed. The results are shown in FIG. 7. The TiSi-added Ru/Ba-MgO catalyst exhibited stable catalytic activity with almost no decrease in the ammonia production rate, even when the reaction was conducted continuously for more than 300 hours.

### (Examples 2 to 5)

### [Synthesis of TiSi-Added Ru/Ba-MgO Powders]

TiSi-added Ru/Ba-MgO powders of Examples 2 to 5 were obtained in the same manner as in Example 1, except that 0.0437 g (added amount: 3 wt%), 0.146 g (added amount: 10 wt%), 0.255 g (added amount: 17.5 wt%), and 0.728 g (added amount: 50 wt%) of TiSi were added, respectively.

### [Ammonia Synthesis Using TiSi-Added Ru/Ba-MgO]

### <Ammonia Synthesis Reaction>

An ammonia synthesis reaction was carried out under the same conditions as in Example 1. The ammonia synthesis rate at 340°C and 0.9 MPa and the ammonia synthesis rate at 400°C and 0.9 MPa were measured. The results are shown in FIG. 1.

### (Example 6)

The ammonia synthesis activity of TiSi-added Ru/Ba-MgO was evaluated under the same conditions as in Example 1, except that the pretreatment conditions were 600°C under a nitrogen atmosphere. Specifically, the ammonia synthesis rate at 400°C and 0.9 MPa was measured. The results are shown in FIG. 2. In addition, FIG. 2 also shows ammonia synthesis activity in a test area in which the pretreatment conditions for the ammonia synthesis reaction were at 450°C and in an atmosphere of a mixed gas of nitrogen and hydrogen (N₂/H₂ = 1/3(v/v)) (that is, ammonia synthesis activity of TiSi-added Ru/Ba-MgO under conditions which were the same as in Example 1); and ammonia synthesis activity in a test area without TiSi addition (that is, ammonia synthesis activity of Ru/Ba-MgO under conditions (no addition of TiSi) which were the same as in Comparative Example 1).

### (Example 7)

The ammonia synthesis activity of TiSi-added Ru/Ba-MgO was evaluated under the same conditions as in Example 1, except that the pretreatment temperature was 600°C.

An ammonia synthesis reaction was carried out under the same conditions as in Example 1. The ammonia synthesis rate at 400°C and 0.9 MPa was measured. The results are shown in FIG. 4.

### (Example 8)

### [Loading Fe on Ba-MgO]

The TiSi-added Fe/Ba-MgO powder of the present example was obtained in the same manner as in Example 1, except that 1.8 g of Fe(NO₃)₃·9(H₂O) (equivalent to 20% by mass of supported metal Fe with respect to Ba-MgO) was used instead of Ru(NO)(NO₃)₃ .

An ammonia synthesis reaction was carried out under the same conditions as in Example 1. The ammonia synthesis rate at 400°C and 0.9 MPa was measured. The results are shown in FIG. 4.

### (Example 9)

The ammonia synthesis activity of TiSi-added Fe/Ba-MgO was evaluated under the same conditions as in Example 8, except that the pretreatment temperature was 600°C. The results are shown in FIG. 4.

### (Example 10)

### [Loading Co on Ba-MgO]

The TiSi-added Co/Ba-MgO powder of the present example was obtained in the same manner, except that 0.118 g of Co₂(CO)₈ (equivalent to 8% by mass of supported metal Co with respect to Ba-MgO) was used instead of Ru(NO)(NO₃)₃.

An ammonia synthesis reaction was carried out under the same conditions as in Example 1. The ammonia synthesis rate at 400°C and 0.9 MPa was measured. The results are shown in FIG. 4.

### (Example 11)

The ammonia synthesis activity of TiSi-added Co/Ba-MgO was evaluated under the same conditions as in Example 10, except that the pretreatment temperature was 600°C. An ammonia synthesis reaction was carried out under the same conditions as in Example 1. The ammonia synthesis rate at 400°C and 0.9 MPa was measured. The results are shown in FIG. 4.

### [Catalyst Additives Other Than TiSi]

### (Example 12)

The Ti-added Ru/Ba-MgO powder of the present example was prepared in the same manner as in Example 1, except that 0.364 g of Ti (25% by mass with respect to Ru/Ba-MgO) was used instead of TiSi.

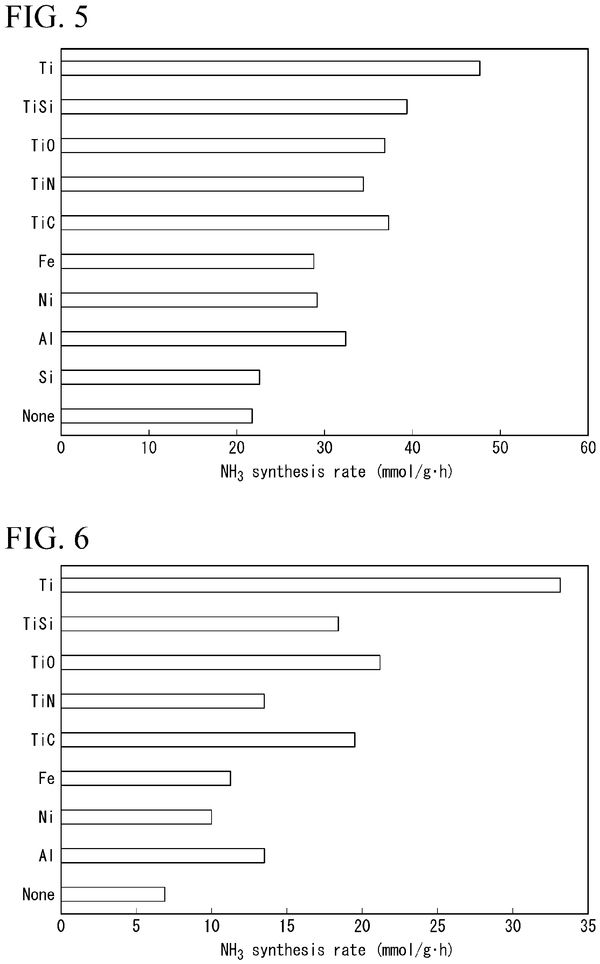

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 13)

The TiO-added Ru/Ba-MgO powder of the present example was prepared in the same manner as in Example 1, except that 0.364 g of TiO (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 14)

The TiN-added Ru/Ba-MgO powder of the present example was prepared in the same manner as in Example 1, except that 0.364 g of TiN (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 15)

The TiC-added Ru/Ba-MgO powder of the present example was prepared in the same manner as in Example 1, except that 0.364 g of TiC (25% by mass added to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 16)

The Fe-added Ru/Ba-MgO powder of the present example was prepared in the same manner as in Example 1, except that 0.364 g of Fe (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 17)

The Ni-added Ru/Ba-MgO powder of the present example was prepared in the same manner as in Example 1, except that 0.364 g of Ni (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 18)

The Al-added Ru/Ba-MgO powder of the present example was prepared in the same manner as in Example 1, except that 0.364 g of Al (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5. Furthermore, the ammonia synthesis rate at 340°C and 0.9 MPa was measured. The results are shown in FIG. 6.

### (Example 19)

The Si-added Ru/Ba-MgO powder of the present example was prepared in the same manner as in Example 1, except that 0.364 g of Si (25% by mass with respect to Ru/Ba-MgO) was used instead of TiSi.

An ammonia synthesis reaction was carried out under the same conditions as in Example 1. The ammonia synthesis rate at 400°C and 0.9 MPa was measured. The results are shown in FIG. 5.

### (Comparative Example 1)

### [Synthesis of Ru/Ba-MgO Powder]

A Ru/Ba-MgO powder was obtained in the same manner as in Example 1 except that TiSi was not added.

### <Ammonia Synthesis Reaction>

An ammonia synthesis reaction was carried out under the same conditions as in Example 1. The ammonia synthesis rates at 340°C and 400°C, and 0.9 MPa were measured. The results are shown in FIG. 1 to FIG. 3 and Table 1.

### (Comparative Example 2)

The ammonia synthesis rate at 400°C and 0.9 MPa was measured under the same conditions as in Comparative Example 1, except that the pretreatment conditions were 600°C, and the ammonia synthesis activity of Ru/Ba-MgO was evaluated. The results are shown in FIG. 3.

### (Comparative Example 3)

### [Synthesis of Ru/TiSi Powder]

An aqueous solution containing 0.1714g of Ru(NO)(NO₃)₃ (corresponding to 5% by mass of supported metal Ru with respect to TiSi) and 1.3 g of distilled water was prepared. 1.0 g of TiSi powder was added to the above aqueous solution, and the mixture was kneaded in a mortar for about 15 minutes. A mixture of TiSi+Ru(NO)(NO₃)₃ was obtained by drying the obtained kneaded product at 140°C for 2 hours.

The mixture obtained above was heated from room temperature to 400°C at a temperature increase rate of 5°C/min in a nitrogen gas atmosphere at atmospheric pressure, and then held at 450°C for an additional 4 hours. Thereafter, by cooling the mixture to room temperature, a Ru/TiSi powder of the present comparative example was obtained as a catalyst composition (ammonia synthesis catalyst) of the present example.

### <Ammonia Synthesis Reaction>

An ammonia synthesis reaction was carried out under the same conditions as in Example 1. The ammonia synthesis rate at 400°C and 0.9 MPa was measured. The results are shown in FIG. 3.

### (Comparative Example 4)

### [Loading Fe on Ba-MgO]

An Fe/Ba-MgO powder of the present comparative example was obtained in the same manner as in Comparative Example 1, except that 1.8 g of Fe(NO₃)₃·9(H₂O) (equivalent to 20% by mass of supported metal Fe with respect to Ba-MgO) was used instead of Ru(NO)(NO₃)₃.

### <Ammonia Synthesis Reaction>

An ammonia synthesis reaction was carried out under the same conditions as in Example 1. The ammonia synthesis rate at 400°C and 0.9 MPa was measured. The results are shown in FIG. 4.

### (Comparative Example 5)

The ammonia synthesis activity of Fe/Ba-MgO was evaluated under the same conditions as in Comparative Example 4, except that the pretreatment conditions were 600°C. The results are shown in FIG. 4.

### (Comparative Example 6)

### [Loading Co on Ba-MgO]

A Co/Ba-MgO powder of the present comparative example was obtained in the same manner as the above, except that 0.118 g of Co₂(CO)₈ (equivalent to 8% by mass of supported metal Co with respect to Ba-MgO) was used instead of Ru(NO)(NO₃)₃.

### <Ammonia Synthesis Reaction>

An ammonia synthesis reaction was carried out under the same conditions as in Example 1. The ammonia synthesis rate at 400°C and 0.9 MPa was measured. The results are shown in FIG. 4.

### (Comparative Example 7)

The ammonia synthesis activity of Co/Ba-MgO was evaluated under the same conditions as in Comparative Example 6, except that the pretreatment conditions were 600°C. The results are shown in FIG. 4.

### (Example 20)

### (Preparation of Catalyst Composition (Ammonia Synthesis Catalyst))

### [Synthesis of TiSi-Added Ru/Sr-MgO Powder]

### (I) Preparation of a mixture of TiSi and precursor of chemical reaction catalyst Ru/Sr-MgO

An aqueous solution containing 0.0525g of Sr(NO₃)₂, 0.1714 g of Ru(NO)(NO₃)₃ (equivalent to 5% by mass of supported metal Ru with respect to Ba-MgO), and 1.3 g of distilled water was prepared. 1.0 g of MgO powder was added to the above aqueous solution, and the mixture was kneaded in a mortar for about 15 minutes to obtain a paste. To the obtained paste, 0.364 g of TiSi (25% by mass with respect to Ru/Sr/MgO) was added and the paste was kneaded in a mortar. A mixture of TiSi+"MgO+Sr(NO₃)₂+Ru(NO)(NO₃)₃" was obtained by drying the obtained kneaded product at 140°C for 2 hours.

(II) The mixture obtained above was heated from room temperature to 400°C at a heating rate of 5°C/min in a nitrogen gas atmosphere and at atmospheric pressure, and then held at 450°C for an additional 4 hours. Thereafter, by cooling the mixture to room temperature, a TiSi-added Ru/Sr-MgO powder was obtained as the catalyst composition (ammonia synthesis catalyst) of the present example.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Example 21)

### (Preparation of Catalyst Composition (Ammonia Synthesis Catalyst))

### [Synthesis of TiSi-Added Ru/BaAl₂O₄ Powder]

### (1) Preparation of a mixture of TiSi and precursor of chemical reaction catalyst Ru/BaAl₂O₄

0.148 g of barium carbonate (Wako Pure Chemical Corporation, 99.9%) and 0.117 g of aluminum hydroxide (Kojundo Chemical Laboratory Co.,Ltd., 99.99%) were mixed so that the molar ratio of Ba and Al was 1:2. The resulting mixture was placed in an alumina crucible, and the temperature was raised to 1000°C for 3 hours and maintained for 10 hours to obtain BaAl₂O₄ oxide.

0.50g of the obtained powdered Ru/BaAl₂O₄ and 0.056 g of Ru₃(CO)₁₂ (manufactured by Aldrich, 99%) (equivalent to 5% by mass of supported metal Ru with respect to BaAl₂O₄) were inserted into a silica glass tube, and were heated at 70°C for 1 hour in a vacuum. Thereafter, Ru₃(CO)₁₂ was attached to the surface of powdered BaAl₂O₄ by heating it at 120°C for 1 hour.

The obtained powdered Ru/BaAl₂O₄ to which Ru₃(CO)₁₂ was attached was heated at 250°C for 2 hours to thermally decompose Ru₃(CO)₁₂, and thereby a metal-supported material on which Ru was fixed on BaAl₂O₄ (hereinafter referred to as Ru/BaAl₂O₄) was obtained.

1.0 g of the obtained powdered Ru/BaAl₂O₄, 0.364 g of TiSi, and 1.3 g of dodecane were kneaded in a mortar, the obtained kneaded product was dried at 140°C for about 2 hours, and then was heated in an atmosphere of nitrogen gas and under atmospheric pressure, by raising the temperature from room temperature to 400°C at a temperature increase rate of 5°C/min, and then further maintaining the temperature at 450°C for 4 hours. Thereafter, by cooling the mixture to room temperature, a mixture of TiSi+Ru/BaAl₂O₄ was obtained.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

**[Table 1]**

| | Catalyst | NH₃ Synthesis Rate | Addition/ No Addition |
|---|---|---|---|
| | | (mmol/g·h) | |
| Example 1 | TiSi//Ru/Ba-MgO | 39.4 | 1.8 |
| Comparative Example 1 | Ru/Ba-MgO | 21.8 | |
| Example 20 | TiSi//Ru/Sr-MgO | 24.7 | 1.7 |
| Comparative Example 8 | Ru/Sr-MgO | 14.8 | |
| Example 21 | TiSi//Ru/BaAl₂O₄ | 17.3 | 1.8 |
| Comparative Example 9 | RuIBaAlzOa | 9.8 | |
| Example 22 | TiSi//Ru/CeO2 | 15.2 | 1.3 |
| Comparative Example 10 | Ru/CeO₂ | 11.7 | |
| Example 23 | TiSi//Ru/Ba-CeO2 | 22.6 | 1.1 |
| Comparative Example 11 | Ru/Ba-CeO₂ | 19.8 | |

### (Example 22)

### (Preparation of Catalyst Composition (Ammonia Synthesis Catalyst))

### [Synthesis of TiSi-Added Ru/CeO₂ Powder]

### (I) Preparation of a mixture of TiSi and precursor of chemical reaction catalyst Ru/CeO₂

An aqueous solution containing 0.1714g of Ru(NO)(NO₃)₃ (corresponding to 5% by mass of supported metal Ru with respect to CeO₂) and 1.3 g of distilled water was prepared. 1.0 g of CeO₂ powder was added to the above aqueous solution, and the mixture was kneaded in a mortar for about 15 minutes to obtain a paste. To the obtained paste, 0.364 g of TiSi (25% by mass with respect to Ru/CeO₂) was added and the paste was kneaded in a mortar. By drying the obtained kneaded product at 140°C for about 2 hours, a mixture of TiSi+"CeO₂+Ru(NO)(NO₃)₃" was obtained.

(II) The mixture obtained above was heated from room temperature to 400°C at a heating rate of 5°C/min in a nitrogen gas atmosphere at atmospheric pressure, and then the mixture was held at 450°C for an additional 4 hours. Thereafter, by cooling the mixture to room temperature, a TiSi-added Ru/CeO₂ powder was obtained as the catalyst composition (ammonia synthesis catalyst) of the present example.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Example 23)

### (Preparation of Catalyst Composition (Ammonia Synthesis Catalyst))

### [Synthesis of TiSi-Added Ru/Ba-CeO₂ Powder]

### (I) Preparation of a mixture of TiSi and precursor of chemical reaction catalyst Ru/Ba-CeO₂

An aqueous solution containing 0.0648g of Ba(NO₃)₂ , 0.1714 g of Ru(NO)(NO₃)₃ (equivalent to 5% by mass of supported metal Ru with respect to Ba-CeO₂), and 1.3 g of distilled water was prepared. 1.0 g of CeO₂ powder was added to the above aqueous solution, and the mixture was kneaded in a mortar for about 15 minutes to obtain a paste. To the obtained paste, 0.364 g of TiSi (25% by mass with respect to Ru/Ba-CeO₂) was added and the paste was kneaded in a mortar. By drying the obtained kneaded product at 140°C for 2 hours, a mixture of TiSi+"CeO₂+Ba(NO₃)₂+Ru(NO)(NO₃)₃" was obtained.

(II) The mixture obtained above was heated from room temperature to 400°C at a heating rate of 5°C/min in a nitrogen gas atmosphere at atmospheric pressure, and then held at 450°C for an additional 4 hours. Thereafter, by cooling the mixture to room temperature, a TiSi-added Ru/Ba-CeO₂ powder was obtained as the catalyst composition (ammonia synthesis catalyst) of the present example.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Comparative Example 8)

### [Synthesis of Ru/Sr-MgO Powder]

A Ru/Sr-MgO powder was obtained in the same manner as in Example 20, except that TiSi was not added.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Comparative Example 9)

### [Synthesis of Ru/BaAl₂O₄ Powder]

A Ru/BaAl₂O₄ powder was obtained in the same manner as in Example 21 except that TiSi was not added.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Comparative Example 10)

### [Synthesis of Ru/CeO₂ Powder]

A Ru/CeO₂ powder was obtained in the same manner as in Example 22, except that TiSi was not added.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Comparative Example 11)

### [Synthesis of Ru/Ba-CeO₂ Powder]

A Ru/Ba-CeO₂ powder was obtained in the same manner as in Example 23, except that TiSi was not added.

### <Ammonia Synthesis Reaction>

An ammonia synthesis reaction was carried out under the same conditions as in Example 1. The ammonia synthesis rate at 400°C and 0.9 MPa was measured. The results are shown in Table 1.

### (Discussion)

The results of each example and comparative example shown in figures and tables will be explained below. The present invention is not limited to the configuration of each example.

### <Table 1>

It was confirmed that the ammonia synthesis activity was improved by adding TiSi as a catalyst additive not only to the Ru/Ba-MgO catalyst but also to other chemical reaction catalysts. In a chemical reaction catalyst using a rare earth oxide as a catalyst support, such as Ru/CeO₂, when TiSi was added, the same effect of extracting oxygen from the oxide occurs because TiSi extracts oxygen from the oxide even without hydrogen reduction at high temperatures. Further, a metal oxide containing Ba, such as BaAl₂O₄, has the same effect, and it is thought that the effect of adding TiSi is also expressed in other complex oxides containing Ba. Furthermore, in the Ru/Sr-MgO catalyst to which Sr was added instead of Ba, it was confirmed that the ammonia synthesis activity was improved by the addition of TiSi. In addition, in the case of the Ru/Ba-MgO catalyst, which had the highest activity, it is thought that the reason for the high effect of TiSi addition is because high catalytic activity was developed due to electron donation from the electrons formed at F centers due to formation of oxygen defects in BaO rather than MgO. In addition, in the case of the SrO catalyst, oxygen defects are likely to be formed next to BaO, and it is thought that the addition of TiSi caused oxygen defects in SrO, resulting in the development of electron donating properties.

### <FIG. 1>

FIG. 1 shows the relationship between the amount of catalyst additive added and the catalytic effect for the catalyst compositions (ammonia synthesis catalysts) of the present embodiment of Examples 1 to 5.

Compared to the ammonia production rate of the Ru/Ba-MgO catalyst before TiSi addition (21.8 mmol/g·hr), the ammonia production rate increases as the amount of added TiSi increases, and when 25 wt% TiSi is added, the ammonia production rate became the maximum.

### <FIG. 2>

Even when pretreated at 600°C in a gas atmosphere containing only N₂, the ammonia synthesis activity of the TiSi-added Ru/Ba-MgO catalyst was the same as that of TiSi-added Ru/Ba pretreated at 450°C in an N₂+H₂ atmosphere. In other words, it was shown that it is possible to reductively activate the catalyst in the presence of a reducing agent such as TiSi without using hydrogen gas during pretreatment.

### <FIG. 3>

The ammonia synthesis activity of the TiSi-added Ru/Ba-MgO catalyst under the same conditions as in Example 1, and the ammonia synthesis activity of the Ru/Ba-MgO catalyst without TiSi which was pretreated at 600°C were evaluated comparatively.

Generally, when a Ru-based catalyst is reduced at high temperature in an atmosphere containing hydrogen, the catalytic activity of the chemical reaction catalyst is often greatly improved. As shown in FIG. 3, the Ru/Ba-MgO catalyst has an ammonia production rate of 21.8 mmol/g·hr when pretreated at 450°C, but when pretreated at 600°C, the ammonia production rate improved to 40.3 mmol/g·hr. On the other hand, the ammonia synthesis activity of the TiSi-added Ru/Ba-MgO catalyst pretreated at 450°C is the same as that of the Ru/Ba-MgO catalyst without catalyst additives such as TiSi which was pretreated at 600°C. In the case of Ru/TiSi catalysts, there is almost no ammonia synthesis activity, which suggests that TiSi itself has no catalytic activity and that TiSi can promote the catalytic activity of catalyst compositions containing Ru/Ba-MgO catalysts at lower temperatures. It is thought that the activity of the Ru catalyst is greatly improved by the donation of electrons from the F center electrons formed just below a lower end of a conduction band of BaO in which oxygen defects were formed by TiSi.

### <FIG. 4>

In the case of pretreatment at 450°C, the ammonia synthesis activity of the Ru/Ba-MgO catalyst was improved by about 1.8 times by the addition of TiSi, but in the case of pretreatment at 600°C, the ammonia synthesis activity of the Ru/Ba-MgO catalyst was improved by about 1.26 times by the addition of TiSi. Thus, although the rate of improvement in ammonia synthesis activity decreased, it was shown that the examples in which TiSi was added were also effective in promoting catalytic activity even in high-temperature pretreatment.

In addition, a catalyst composition obtained by adding TiSi as a catalyst additive to the metal-supported catalyst in which an Fe-supported catalyst or a Co-supported catalyst were used instead of a Ru-supported catalyst as a chemical reaction catalyst (metal-supported catalyst) is similar to TiSi-added Ru/Ba-MgO, and the ammonia synthesis activity was improved compared to the catalyst without a catalyst additive.

In addition, in the case of pretreatment at 450°C, the ammonia synthesis activity of the Fe/Ba-MgO catalyst hardly changed due to the addition of TiSi, but in the case of pretreatment at 600°C, the ammonia synthesis activity of the Fe/Ba-MgO catalyst was improved by about 1.5 times by the addition of TiSi. It has been found that when Fe is used as a supported metal, relatively strong pretreatment conditions are required even when TiSi is added.

On the other hand, in the case of pretreatment at 450°C, the ammonia synthesis activity of the Co/Ba-MgO catalyst was improved by about 1.8 times by the addition of TiSi. In the case of pretreatment at 600°C, the ammonia synthesis activity of the Co/Ba-MgO catalyst was improved by about 1.5 times by the addition of TiSi.

### <FIG. 5 and FIG. 6>

When various substances, in place of TiSi, were added as catalyst additives to Ru/Ba-MgO catalysts and then pretreated to promote the catalytic activity of the catalyst compositions, most of the materials tested showed that the ammonia synthesis activity was greatly improved compared to the Ru/Ba-MgO catalyst (without catalyst additives). Particularly in an experimental system using a Ti-based compound, the effect of adding the catalyst additive was remarkable. Among them, when Ti was added, the effect of improving ammonia synthesis activity was higher than the case when TiSi was added. On the other hand, when Si was added, almost no effect of the addition of the catalyst additive (i.e., improvement in ammonia synthesis activity) was observed. Although the factors contributing to the improvement in ammonia activity by the catalyst additive of the present invention are not yet fully clarified, all of the test substances added to the catalyst composition are easily oxidized substances, and it is believed that oxygen is extracted from BaO in the Ru/Ba-MgO catalyst. Among alkaline earth metal oxides, BaO has a small oxygen defect formation energy, and the F center is formed just below the lower end of the conduction band, so it becomes an electron donor. It is thought that this acts as an electronic promoter and, as a result, greatly improves the activity of the Ru catalyst.

### <Effect of Adding Catalyst Additive>

Although the reaction mechanism related to the effect shown in the above example is still unknown, an oxide, such as BaO, in which oxygen defects are formed and an F center is formed near the bottom of the conduction band, making it possible to form a surface with a low work function, is considered to have high electron donating properties. When forming such oxygen defects, it is important to add a substance, such as TiSi, with a high oxygen extraction ability, to the chemical reaction catalyst as a catalyst additive.

The catalyst additive is used as a catalyst promoter or a catalyst promoter-like substance for the chemical reaction catalyst.

Here, the term "catalyst promoter-like substance" means that it alone does not have a catalytic effect greater than the purpose or target catalytic action of the chemical reaction catalyst, and that it is a substance that has the effect of assisting the catalytic chemical reaction accelerated by the catalyst (strengthening the catalytic action of the reaction catalyst alone or compensating for drawbacks of the reaction catalyst), together with the target or target reaction catalyst.

Here, a "catalyst promoter" does not have a catalytic effect by itself, but together with the target or target reaction catalyst, it has the effect of assisting the catalytic chemical reaction that the reaction catalyst is accelerating. It is a substance that has the function of strengthening the catalytic action shown alone or compensating for the drawbacks of the reaction catalyst.

For example, the following reaction mechanism can be considered.

As a catalyst promoter, a catalyst additive such as titanium silicide (TiSiₓ) of Example 1 extracts oxygen ions from inside of the crystal structure of the chemical reaction catalyst (e.g., an oxide such as BaO/CeO₂) and replaces oxygen ions with electrons. The electrons themselves become anions and form ionic crystals (i.e., electrides). Although the ionic crystals emit electrons as easily as alkali metals, the ionic crystals are chemically and thermally stable even in the atmosphere. The above electrons promote the ammonia synthesis reaction by acting, for example, on cutting the nitrogen-nitrogen triple bond.

On the other hand, in the case of conventional catalysts that do not contain catalyst promoters, for example, it has been known that the reaction catalytic activity can be improved by adding a "metal component with catalytic activity" such as Ru to the reaction catalyst and then reducing the catalyst with hydrogen at high temperatures. Therefore, there were problems such as a deterioration in the stability of the reaction catalyst and a heavy burden on the reactor due to high-temperature hydrogen treatment. By using the catalyst additive of the present invention as a catalyst promoter, it can be expected to suppress deterioration in catalyst stability and to reduce the burden on the reactor due to high-temperature hydrogen treatment.

## Claims

1. A catalyst composition comprising:
a catalyst additive represented by the following formula (1); and
a chemical reaction catalyst comprising a catalyst substance represented by the following formula (2),
LₘAₙ (1),
wherein in formula (1), L represents at least one selected from the group consisting of transition elements and aluminum (Al),
A represents at least one selected from the group consisting of silicon (Si), oxygen (O), nitrogen (N), and carbon (C),
m represents a numerical value of 1 or more, and
n represents a numerical value of 0 or more,
MₚO_{q}C_{w}NₛHₜ (2),
wherein in formula (2), M represents one or more selected from the group consisting of typical elements and transition elements, provided that M does not contain aluminum (Al) and calcium (Ca) at the same time, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.

2. The catalyst composition according to claim 1,
wherein the chemical reaction catalyst and the catalyst composition have hydrogenation reaction activity, and
the hydrogenation reaction activity of the catalyst composition exceeds the hydrogenation reaction activity of the chemical reaction catalyst.

3. The catalyst composition according to claim 2, wherein both of the hydrogenation reaction activity of the chemical reaction catalyst and the hydrogenation reaction activity of the catalyst composition are ammonia synthesis activity.

4. The catalyst composition according to claim 2 or 3, wherein the catalyst additive has no hydrogenation reaction activity.

5. The catalyst composition according to any one of claims 1 to 3, wherein in formula (1), L is at least one selected from the group consisting of titanium (Ti), iron (Fe), nickel (Ni), and aluminum (Al).

6. The catalyst composition according to claim 5, wherein in formula (1), L is titanium (Ti).

7. The catalyst composition according to any one of claims 1 to 3, wherein the catalyst additive is at least one selected from the group consisting of Fe, Ni, Al, Ti, TiSi, TiO, TiN, and TiC.

8. The catalyst composition according to any one of claims 1 to 3,
wherein in formula (2), M represents one or more selected from the group consisting of barium (Ba), cerium (Ce), magnesium (Mg), calcium (Ca), strontium (Sr), lanthanum (La), silicon (Si), and aluminum (Al), and
p represents a numerical value of 1 or more, q represents a numerical value of 1 or more, w represents a numerical value of 0 or more, s represents a numerical value of 0 or more, and t represents a numerical value of 0 or more.

9. The catalyst composition according to any one of claims 1 to 3,
wherein in formula (2), M represents one or two or more selected from the group consisting of barium (Ba), cerium (Ce), magnesium (Mg), calcium (Ca), strontium (Sr), and lanthanum (La), and
p represents a numerical value of 1 or more, q represents a numerical value of 1 or more, w represents 0, s represents 0, and t represents 0.

10. The catalyst composition according to any one of claims 1 to 3,
wherein the catalyst substance represented by formula (2) is a catalyst substance represented by the following formula (2-1),
MₚO_{q} (2-1),
wherein in formula (2-1), M, p, q, w, s, and t have the same meaning as M, p, q, w, s, and t in formula (2) above.

11. The catalyst composition according to any one of claims 1 to 3, wherein the catalyst substance is one selected from the group consisting of Ba-MgO, Sr-MgO, BaAl₂O₄, CeO₂, and Ba-CeO₂.

12. The catalyst composition according to any one of claims 1 to 3,
wherein the chemical reaction catalyst further comprises a catalytically active metal,
the chemical reaction catalyst is a metal-supported material in which the catalytically active metal is supported on a catalyst support, and
the catalyst support is the catalyst substance represented by formula (2).

13. The catalyst composition according to claim 12,
wherein the catalytically active metal is at least one selected from the group consisting of ruthenium (Ru), cobalt (Co), iron (Fe), nickel (Ni), molybdenum (Mo), rhodium (Rh), rhenium (Re), chromium (Cr), and manganese (Mn).

14. The catalyst composition according to claim 12, wherein the catalyst support does not contain silicon (Si), oxygen (O), and aluminum (Al) at the same time.

15. The catalyst composition according to claim 12, wherein the catalyst support is a basic metal oxide.

16. The catalyst composition according to claim 15, wherein the catalyst support is a basic metal oxide having crystallinity.

17. The catalyst composition according to any one of claims 1 to 3,
wherein in formula (1), L is titanium (Ti),
in formula (2), M represents one or two or more selected from the group consisting of barium (Ba), cerium (Ce), magnesium (Mg), calcium (Ca), strontium (Sr), and lanthanum (La),
p represents a numerical value of 1 or more, and q represents a numerical value of 1 or more,
the chemical reaction catalyst further comprises a catalytically active metal,
the chemical reaction catalyst is a metal-supported material in which the catalytically active metal is supported on a catalyst support,
the catalyst support is the catalyst substance represented by formula (2), and
the catalytically active metal is at least one selected from the group consisting of ruthenium (Ru), cobalt (Co), and iron (Fe).

18. The catalyst composition according to any one of claims 1 to 3,
wherein the catalyst additive is at least one selected from the group consisting of Ti, TiSi, TiO, TiN, and TiC,
the catalyst substance is one selected from the group consisting of Ba-MgO, Sr-MgO, BaAl₂O₄, CeO₂, and Ba-CeO₂,
the chemical reaction catalyst further comprises a catalytically active metal,
the chemical reaction catalyst is a metal-supported material in which the catalytically active metal is supported on a catalyst support,
the catalyst support is the catalyst substance, and
the catalytically active metal is one selected from the group consisting of Ru, Co, and Fe.

19. A method for promoting catalytic activity, which promotes an electron donating ability of a chemical reaction catalyst to promote catalytic activity and comprises a step of adding or mixing a catalyst additive to the chemical reaction catalyst or its precursor,
the method comprising:
a step of reacting a mixture obtained by adding or mixing the catalyst additive to the chemical reaction catalyst or its precursor under a temperature condition of less than 700°C and in the presence of a reducing gas or an inert gas,
wherein the catalyst additive is a catalyst additive represented by the following formula (1), and
the chemical reaction catalyst is a chemical reaction catalyst comprising a catalyst substance represented by the following formula (2),
LₘAₙ (1),
wherein in formula (1), L represents at least one selected from the group consisting of transition elements and aluminum (Al),
a represents at least one selected from the group consisting of silicon (Si), oxygen (O), nitrogen (N), and carbon (C), and
m represents a numerical value of 1 or more, and n represents a numerical value of 0 or more,
MₚO_{q}C_{w}NₛHₜ (2),
wherein in formula (2), M represents one or more selected from the group consisting of typical elements and transition elements, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.

20. The method for promoting catalytic activity according to claim 19, wherein the temperature condition is 600°C or less.

21. The method for promoting catalytic activity according to claim 19 or 20,
wherein the chemical reaction catalyst further includes a catalytically active metal,
the chemical reaction catalyst is a metal-supported material in which the catalytically active metal is supported on a catalyst support, and
the catalyst support is the catalyst substance represented by formula (2).

22. The method for promoting catalytic activity according to claim 19 or 20, wherein the catalytic activity is hydrogenation reaction activity.

23. The method for promoting catalytic activity according to claim 22, wherein the hydrogenation reaction activity is ammonia synthesis activity.

24. The method for promoting catalytic activity according to claim 19 or 20, wherein the catalyst additive has no hydrogenation reaction activity.

25. A method for producing a catalyst composition according to any one of claims 1 to 3, the method comprising:
a first step of mixing the catalyst additive and the chemical reaction catalyst or its precursor; and
a second step of reacting a first mixture obtained in the first step under a temperature condition of less than 700°C and in the presence of a reducing gas or an inert gas.

26. A method for producing a catalyst composition, comprising:
a first step of mixing a catalyst additive and a chemical reaction catalyst or its precursor; and
a second step of reacting a first mixture obtained in the first step under a temperature condition of less than 700°C and in the presence of a reducing gas or an inert gas,
wherein the catalyst additive is a catalyst additive represented by the following formula (1), and
the chemical reaction catalyst is a chemical reaction catalyst comprising a catalyst substance represented by the following formula (2),
LₘAₙ (1),
wherein in formula (1), L represents at least one selected from the group consisting of transition elements and aluminum (Al),
A represents at least one selected from the group consisting of silicon (Si), oxygen (O), nitrogen (N), and carbon (C), and
m represents a numerical value of 1 or more, and n represents a numerical value of 0 or more,
MₚO_{q}C_{w}NₛHₜ (2),
wherein in formula (2), M represents one or more selected from the group consisting of typical elements and transition elements, and
p represents a numerical value of 1 or more, q represents a numerical value of 0 or more, w represents a numerical value of 0 or more, s represents a numerical value of 0 or more, and t represents a numerical value of 0 or more; however, q, w, s, and t are not 0 at the same time.

27. The method for producing a catalyst composition according to claim 25, wherein the temperature condition is 600°C or less.

28. The method for producing a catalyst composition according to claim 25, the method further comprising:
a third step of obtaining the catalyst composition using a second mixture obtained in the second step without removing the catalyst additive contained in the second mixture.

29. The method for producing a catalyst composition according to claim 25, the method further comprising:
a third step of removing the catalyst additive contained in a second mixture using the second mixture obtained in the second step.

30. A catalyst composition, which is obtained using the method for producing a catalyst composition according to claim 26.

31. A method for producing a hydride, comprising a step of reacting a raw material compound to be hydrogenated with hydrogen in the presence of the catalyst composition according to any one of claims 1 to 3 and 30.

32. A method for producing ammonia, comprising a step of reacting nitrogen and hydrogen in the presence of the catalyst composition according to any one of claims 1 to 3 and 30.

33. A use of a catalyst additive represented by the following formula (1) for a reaction, wherein the reaction is a reaction of reacting a mixture, obtained by adding or mixing a chemical reaction catalyst or its precursor, in the presence of a reducing gas or an inert gas under a temperature condition of less than 700°C, in a catalytic activity promotion reaction that promotes an electron donating ability of the chemical reaction catalyst to promote catalytic activity,
LₘAₙ (1),
wherein in formula (1), L represents at least one selected from the group consisting of transition elements and aluminum (Al),
A represents at least one selected from the group consisting of silicon (Si), oxygen (O), nitrogen (N), and carbon (C),
m represents a numerical value of 1 or more, and
n represents a numerical value of 0 or more.
